# EUROPÄISCHE PATENTANMELDUNG

(11) **EP 2 068 268 A1**
(43) Veröffentlichungstag der Anmeldung: **10.06.2009**
(21) Anmeldenummer: 07122670.8
(22) Anmeldetag: 07.12.2007
(51) Int. Cl.: G06K 9/00, B65B 3/00

(54) **Codierung von pharmazeutischen Behältnissen durch Zufallsstrukturen**

(71) Anmelder: F. Hoffmann-La Roche AG, 4070 Basel (CH)
(72) Erfinder: Die Erfindernennung liegt noch nicht vor
(74) Vertreter: Hörschler, Wolfram Johannes

(57) **Zusammenfassung**

Es wird ein Verfahren zur Befüllung von Behältnissen (112), insbesondere von pharmazeutischen Behältnissen, insbesondere von Spritzenkörpem (114), vorgeschlagen, welches folgende Schritte umfasst:
- mindestens ein Behältnis (112) wird bereitgestellt, wobei das Behältnis (112) mindestens einen Werkstoff (136) mit einer Zufallsstruktur (138), insbesondere einer eindeutigen Zufallsstruktur (138), aufweist;
- in einem ersten Identifikationsschritt wird mindestens ein erstes Abbild (134) der Zufallsstruktur (138) gewonnen und in einer Datenbank (142) hinterlegt;
- mindestens ein Füllmedium (118), insbesondere mindestens ein pharmazeutisches Material, wird in das Behältnis (112) eingebracht;
- mindestens eine Information (164) über das Füllmedium (118) wird in der Datenbank (142) hinterlegt und dem ersten Abbild (134) der Zufallsstruktur (138) zugeordnet.

## Beschreibung

### Gebiet der Erfindung

Die Erfindung betrifft ein Verfahren und eine Vorrichtung zur Befüllung von Behältnissen, insbesondere von pharmazeutischen Behältnissen, sowie eine Datenbank zur Verwendung in einem erfindungsgemäßen Verfahren und ein Authentifizierungsverfahren sowie eine Authentifizierungseinrichtung. Derartige Verfahren, Vorrichtungen und Einrichtungen werden insbesondere zur Befüllung von Spritzenkörpern mit pharmazeutischen Materialien, wie beispielsweise Medikamenten, eingesetzt.

### Stand der Technik

In der Pharmazie spielt die Codierung und Markierung pharmazeutischer Behältnisse eine wichtige Rolle. So muss insbesondere sichergestellt werden, dass nach dem Abfüllen pharmazeutischer Materialien, wie beispielsweise von Medikamenten, zu jeder Zeit abgefragt werden kann, welches pharmazeutische Material in dem Behältnis enthalten ist. Darüber hinaus sind Informationen über beispielsweise die Art der Abfüllung, das Herstellungsdatum, eine Dosierung oder ähnliches von wesentlicher Bedeutung, welche später - beispielsweise im Rahmen einer Verpackung der pharmazeutischen Behältnisse - oder auch von einem Benutzer des pharmazeutischen Materials später leicht wieder abzufragen sein sollen.

Ein wesentlicher Punkt stellt dabei der sogenannte Untermischungsschutz dar. Ein derartiger Untermischungsschutz soll sicherstellen, dass auch in einer Anlage, in welcher verschiedene Arten pharmazeutischer Materialien und/oder pharmazeutische Materialien mit unterschiedlichen Eigenschaften - wie beispielsweise unterschiedlichen Wirkstoffkonzentrationen - abgefüllt werden, eine Verwechslung der Behältnisse verhindert wird.

Zu diesem Zweck sind aus dem Stand der Technik zahlreiche Verfahren und Vorrichtungen bekannt, mittels derer pharmazeutische Behältnisse codiert werden können. Beispielsweise beschreibt WO 2006/117692 A1 ein Verfahren zur Identifizierung eines Glasbehältnisses, bei welchem in einem Markierungsschritt die Temperatur des Glasbehältnisses auf einem Wert unterhalb der Glasübergangstemperatur gehalten wird. Anschließend erfolgt eine punktuelle Behandlung mit elektromagnetischer Strahlung, durch welche das Glas des Behältnisses punktuell modifiziert und so markiert wird. Ähnliche Lasermarkierungsverfahren sind auch in DE 101 22 335 C1 oder in DE 102 34 002 B4 beschrieben.

Neben Codierungsverfahren, bei welchen pharmazeutische Behältnisse mit einem Laser markiert werden, sind auch andere Verfahren zum Aufbringen von Markierungen, wie beispielsweise Barcodes, bekannt und prinzipiell für die Markierung pharmazeutischer Behältnisse einsetzbar. So können beispielsweise mittels Siebdruck angebrachte Farbcodes oder Barcodes verwendet werden. Für den Druck von Barcodes stehen neben Siebdruckverfahren eine Reihe von Technologien zur Verfügung, wie beispielsweise Ink-Jet-Drucken, Thermotransfer-Drucken oder Laserdruckverfahren. Derartig codierte pharmazeutische Behältnisse, wie insbesondere Glaskörper, lassen sich später identifizieren, indem dieser Code ausgelesen wird.

Ein Nachteil der beschriebenen Verfahren besteht jedoch darin, dass mittels eines Druckvorgangs oder eines anderen Markierungsvorgangs ein spezifischer Code auf dem pharmazeutischen Behältnis bzw. in diesem pharmazeutischen Behältnis auf- bzw. angebracht werden muss. Derartige Markierungs- oder Druckvorgänge erfordern einen beträchtlichen Aufwand in Form von Geräten und Platz. Die Erzeugung eines haltbaren und gut lesbaren Codes auf einem pharmazeutischen Behältnis, insbesondere einem Glaskörper, ohne hierbei eine Schädigung des Glases zu verursachen, stellt auch heute noch eine technische Herausforderung dar.

Man geht dabei in der Regel davon aus, dass die Codierung beim pharmazeutischen Hersteller stattfindet, damit der Code bestimmte, erst im Hause des pharmazeutischen Herstellers entstehende Daten beinhalten kann. Derartige Codes werden in der Regel als "sprechende Codes" bezeichnet. Dies bedeutet jedoch auch, dass alle eventuellen Einflüsse auf den aktiven pharmazeutischen Inhalt der Behältnisse zeitaufwendig und kostenintensiv überprüft werden müssen.

Neben sprechenden Codes sind jedoch auch anonyme Codes bekannt, also Markierungen, welche als solche nicht in verschlüsselter Form Informationen beinhalten. Ein Beispiel derartiger "anonymer" Codes ist aus US 6,890,759 B2 bekannt. Dort wird ein Verfahren beschrieben, bei welchem ein eindeutiger Identifikator auf jedem Behältnis angebracht wird. Der Identifikatorinformation wird in einer Datenbank eine Information über eine biologische Probe, welche in dem Behältnis aufgenommen ist, zugewiesen.

Eine weitere bekannte Problematik, welche im pharmazeutischen Bereich eine zunehmende Rolle spielt, stellt die Problematik der Fälschungssicherheit dar. Mehr und mehr werden auch pharmazeutische Produkte und Materialien imitiert und dabei teilweise der Ruf namhafter Hersteller ausgenutzt. Derartige Imitate bergen dementsprechend naturgemäß hohe Gesundheitsrisiken für den Anwender, da nicht in allen Fällen sichergestellt ist, dass die Imitate unter gleichen Standards hergestellt sind wie die Originalprodukte. Insbesondere lassen sich auch Barcodes und andere Arten von Informationen auf pharmazeutischen Behältnissen, welche beispielsweise nach den oben beschriebenen Verfahren aufgebracht werden, leicht fälschen.

Aus dem Bereich der Fälschungssicherung, insbesondere für Kreditkarten und ähnliche sicherheitsrelevante Objekte, sind verschiedene Verfahren bekannt, welche auf der Verwendung von Zufallsstrukturen als Identifikatoren beruhen. So beschreibt beispielsweise WO 2006/042913 A1 ein Verfahren zur Authentifizierung von Objekten oder Dokumenten, bei welchen ein Identifikator in Form von einzigartigen Bläschenstrukturen verwendet wird. Aus WO 2007/060323 A1 ist ein Siegel bekannt, welches ebenfalls chaotische Strukturen verwendet, welche sich bei jedem Öffnen des Siegels verändern. In EP 1 477 940 A2 werden Authentifizierungs-Etiketten mit dreidimensionalen Partikelverteilungen für optische Speichermedien verwendet. DE 101 55 780 A1 beschreibt ein Verfahren zur Identifikation und/oder Sicherung von Gegenständen gegen Fälschung und/oder Nachahmung, bei welchem ein bei der Herstellung entstehendes, nicht reproduzierbares körperliches Zufallsmuster mit einem Sensor abgetastet wird und das dabei entstehende Sensorsignal mit dem entsprechenden Signal eines Originalgegenstandes verglichen wird.

Auch diese Authentifizierungsverfahren sind jedoch in der Praxis mit Nachteilen behaftet. So erfordern beispielsweise die in WO 2007/060323 A1 verwendeten Siegel einen separaten Herstellungsschritt. Zudem ist nicht gewährleistet, dass derartige Siegel den harten Bedingungen, welche beispielsweise bei der Spritzenkörperbefüllung herrschen, standhalten.

### Aufgabe der Erfindung

Es ist daher eine Aufgabe der vorliegenden Erfindung, ein Verfahren zur Befüllung von pharmazeutischen Behältnissen bereitzustellen, welches die Nachteile der aus dem Stand der Technik bekannten Verfahren vermeidet. Insbesondere soll das Verfahren eine zuverlässige Codierung der pharmazeutischen Behältnisse beinhalten, welche einen Untermischungsschutz gewährleistet und welche auch zur Fälschungssicherung eingesetzt werden kann.

### Beschreibung der Erfindung

Diese Aufgabe wird durch die Erfindung mit den Merkmalen der unabhängigen Ansprüche gelöst. Vorteilhafte Weiterbildungen der Erfindung sind in den Unteransprüchen dargestellt. Der Wortlaut sämtlicher Ansprüche wird hiermit durch Bezugnahme zum Inhalt der vorliegenden Beschreibung gemacht.

Ein Grundgedanke der vorliegenden Erfindung besteht darin, zur Lösung der oben aufgezeigten Problematik der dauerhaften Codierung pharmazeutischer Behältnisse die aus dem Bereich der Sicherheitstechnik bekannte Verwendung von Zufallsstrukturen heranzuziehen. Um dennoch gleichzeitig eine Zuweisung von Informationen zum Inhalt der pharmazeutischen Behältnisse vornehmen zu können, wird dieser Grundgedanke kombiniert mit der Verwendung einer Datenbank, in welcher zusätzliche Informationen hinterlegt werden können.

Es wird daher ein Verfahren zur Befüllung von Behältnissen, insbesondere von pharmazeutischen Behältnissen, mit mindestens einem Füllmedium, insbesondere mindestens einem pharmazeutischen Material, vorgeschlagen, welches im Nachfolgenden näher dargestellt wird. Dabei ist die dargestellte Reihenfolge der Verfahrensschritte zwar bevorzugt, kann jedoch auch durch eine andere Reihenfolge ersetzt werden. Insbesondere können einzelne Verfahrensschritte in anderer Reihenfolge durchgeführt werden, können wiederholt durchgeführt werden oder können zeitlich parallel durchgeführt werden.

Das nachfolgende Verfahren wird ohne Beschränkung der allgemeinen Möglichkeiten der Erfindung am Beispiel pharmazeutischer Behältnisse mit mindestens einem pharmazeutischen Material als Inhalt beschrieben. Es sei jedoch darauf hingewiesen, dass die Erfindung grundsätzlich auf jedes Behältnis anwendbar ist, welches zur Aufnahme eines Füllmaterials geeignet ist und welches mit einem derartigen Füllmaterial befüllt werden kann bzw. wird. Unter einem "Behältnis" ist somit allgemein eine Vorrichtung zu verstehen, welche zur Aufnahme eines Stoffes oder Mediums in ihrem Inneren oder auf andere Weise geeignet ist. Das Behältnis kann somit beispielsweise eine oder mehrere Ampullen, Spritzen, Phiolen, Gläser, Schachteln, Dosen, Röhrchen, verschweißte Behältnisse, Tüten, Kartons, Blisterverpackungen oder ähnliche Vorrichtungen umfassen, welche zur Aufnahme eines flüssigen und/oder festen und/oder gasförmigen Mediums geeignet sind. Das Behältnis kann verschiedene, üblicherweise für Behältnisse verwendete Materialien umfassen, beispielsweise Glas, Keramik, Kunststoff, Holz, Papier, Pappe und/oder andere Werkstoffe oder Werkstoffkombinationen.

Das Füllmedium umfasst insbesondere mindestens ein pharmazeutisches Füllmedium, wobei der Begriff "pharmazeutisch", wie unten beschrieben, therapeutische und/oder diagnostische Füllmedien umfassen kann. Verallgemeinert kann das Füllmedium jedoch ein beliebiges Füllmedium auch aus anderen Bereichen umfassen, beispielsweise aus Bereichen der Naturwissenschaften, der Technik, der Medizin oder des täglichen Lebens. So kann beispielsweise das Behältnis eine Lebensmittelverpackung umfassen und das Füllmedium ein Lebensmittel. Dies ist von besonderem Interesse, da aufgrund strenger gesetzlicher Anforderungen für Lebensmittel häufig ähnliche Bestimmungen gelten wie für pharmazeutische Materialien, so dass auch hier beispielsweise ein Untermischungsschutz oder die Möglichkeit einer Rückverfolgung von Verpackungen von erheblichem Vorteil sein kann.

Unter einem pharmazeutischen Behältnis ist dabei grundsätzlich jegliche Art von Behältnis zu subsummieren, in welchem mindestens ein pharmazeutisches Material aufgenommen werden kann. Insbesondere kann es sich bei einem derartigen pharmazeutischen Behältnis um eine Ampulle, eine Kapsel, eine Flasche, eine Phiole oder um ein beliebiges anderes pharmazeutisches Behältnis handeln. Besonders bevorzugt ist, wenn das pharmazeutische Behältnis einen Spritzenkörper, insbesondere einen Spritzenkörper aus Glas, beinhaltet, da aufgrund der harten Bedingungen (insbesondere beispielsweise hoher Temperaturen bei einer Einbrennsilikonisierung der Spritzenkörper) herkömmliche Markierungsverfahren mit besonderen Schwierigkeiten verbunden sind.

Das mindestens eine Füllmedium, insbesondere das mindestens eine pharmazeutische Material, welches im Rahmen des vorliegenden Verfahrens in das Behältnis, insbesondere das pharmazeutische Behältnis, eingefüllt wird, kann ein oder mehrere pharmazeutische Materialien eines beliebigen Aggregatszustandes umfassen. So können insbesondere Pulver und/oder Pulvergemische und/oder Flüssigkeiten (beispielsweise Lösungen, Dispersionen oder Emulsionen) und/oder Gase unter dem Begriff des pharmazeutischen Materials subsumiert werden.

Der Begriff "pharmazeutisch" soll dabei die Bereiche der Therapeutik und der Diagnostik umfassen. Unter einem "pharmazeutischen Material" ist somit ein Material zu subsumieren, welches mindestens einen Wirkstoff enthält, also einen Wirkstoff, welcher in einem Patienten und/oder einer biologischen Probe eine gewünschte Wirkung hervorruft und/oder ein Material, welches mindestens einen analytischen Nachweisstoff enthält, also einen Nachweisstoff, der beispielsweise für einen biologischen, chemischen oder medizinischen Nachweis, also beispielsweise einen Nachweis mindestens eines Analyten in einer Probe, genutzt werden kann. Neben therapeutischen Wirkstoffen und/oder analytischen Nachweisstoffen können jedoch auch andere Arten von Wirkstoffen in dem pharmazeutischen Material umfasst sein.

Im Folgenden werden vereinfachend weitgehend die Begriffe "pharmazeutisches Behältnis" und "pharmazeutisches Material" verwendet. Unter Hinweis auf die obigen Angaben können diese Begriffe jedoch sinngemäß auf beliebige "Behältnisse" bzw. "Füllmedien" erweitert werden.

Bei dem erfindungsgemäßen Verfähren wird mindestens ein pharmazeutisches Behältnis bereitgestellt. Dieses Bereitstellen kann beispielsweise manuell oder automatisch erfolgen, beispielsweise im Rahmen eines sogenannten "Line-Fillers", also einer Abfüllanlage, bei welcher nacheinander mehrere Behältnisse befüllt werden, oder im Rahmen eines sogenannten "Tray-Filler", also einer Anlage, in welcher gleichzeitig mehrere pharmazeutische Behältnisse in einem sogenannten "Tray" und/oder "Nest" (also beispielsweise einem Gestell) befüllt werden. Das Bereitstellen kann beispielsweise auch eine Entpackung des pharmazeutischen Behältnisses aus einer Primärverpackung umfassen.

Dabei wird das Verfahren derart durchgeführt, dass das bzw. die verwendeten und bereitgestellten pharmazeutischen Behältnisse mindestens einen Werkstoff mit einer Zufallsstruktur, insbesondere einer eindeutigen Zufallsstruktur, aufweisen. Dieser Werkstoff kann insbesondere einen ohnehin in dem pharmazeutischen Behältnis vorhandenen Werkstoff umfassen bzw. ein derartiger Werkstoff sein, wie beispielsweise ein Werkstoff einer Wand des pharmazeutischen Behältnisses, insbesondere Glas oder Kunststoff. Eine zusätzliche Einbringung dieses Werkstoffes ist also in diesem Fall nicht erforderlich.

Die Zufallsstruktur kann praktisch jede beliebige Struktur umfassen, welche chaotische Eigenschaften aufweist, also Eigenschaften, welche bei zwei verschiedenen pharmazeutischen Behältnissen nicht identisch sind. Bezüglich dieser Zufallsstruktur, also einer chaotischen Materialstruktur, kann beispielsweise auf die Möglichkeiten des eingangs genannten Standes der Technik verwiesen werden. So können beispielsweise Faserorientierungen innerhalb eines Fasermaterials des Behältnisses genutzt werden. Alternativ oder zusätzlich ist es besonders bevorzugt, als Zufallsstruktur eine Struktur von Einschlüssen in dem Werkstoff zu verwenden. Bei diesen Einschlüssen kann es sich beispielsweise um Gaseinschlüsse, insbesondere um Luftbläschen, und/oder um Partikeleinschlüsse handeln. Weiterhin können die Einschlüsse beispielsweise Schmutzpartikel, oxidierte Glaspartikel oder ähnliche eingeschlossene Partikel umfassen. Unter einer "Zufallsstruktur" ist somit eine Struktur zu verstehen, welche nicht gezielt in allen Einzelheiten beeinflusst werden kann, sondern deren Erzeugung chaotischen Einflüssen unterworfen ist.

Weiterhin wird bei dem Verfahren in einem ersten Identifikationsschritt mindestens ein erstes Abbild der Zufallsstruktur gewonnen und in einer Datenbank hinterlegt. Dieses Gewinnen des ersten Abbildes kann auf verschiedene Weise erfolgen, welche beispielsweise an die Art der Zufallsstruktur und/oder den Werkstoff mit der Zufallsstruktur angepasst sein kann. Ist dieser Werkstoff transparent gegenüber elektromagnetischer Strahlung, wie beispielsweise Licht (im sichtbaren und/oder ultravioletten und/oder infraroten Spektralbereich), so kann beispielsweise eine optische Auslesung zur Erzeugung des ersten Abbildes (sowie gegebenenfalls auch der weiteren, im Folgenden erwähnten Abbilder) verwendet werden. Beispielsweise lassen sich Einschlüsse, wie beispielsweise Gaseinschlüsse, mittels einer geeigneten Beleuchtung und eines geeigneten Detektors (zum Beispiel einer geeignet angeordneten Kamera) detektieren. Insofern kann beispielsweise auf die in DE 101 55 780 A1, in EP 1 477 940 A2 und in WO 2007/060323 A1 beschriebenen Verfahren verwiesen werden. Besonders bevorzugt ist die Verwendung eines Durchlichtverfahrens, insbesondere eines Durchlichtverfahrens mit einer Dunkelfeldbeleuchtung, bei welcher die Zufallsstrukturen, insbesondere Einschlüsse, in der Regel als helle Strukturen vor dunklem Hintergrund erscheinen. Ein derartiges Dunkelfeld-Verfahren beinhaltet unter anderem den Vorteil, dass auch bei einer nicht vollkommenen Scharfstellung der Optik noch ein verwertbares Bild generiert werden kann. Alternativ oder zusätzlich lassen sich jedoch auch andere Verfahren einsetzen, beispielsweise Streuverfahren oder ähnliches. Beispielsweise kann als Detektor ein Mikroskop mit einer Kamera eingesetzt werden, welche eine Bläschenstruktur in dem pharmazeutischen Behältnis aufnimmt. Bei anderen Arten von Zufallsstrukturen können andere Verfahren zur Gewinnung des ersten Abbildes bzw. weiterer Abbilder der Zufallsstrukturen eingesetzt werden. So können beispielsweise auch Röntgenverfahren eingesetzt werden, um beispielsweise Materialstrukturen in dem mindestens einen Werkstoff mit der Zufallsstruktur sichtbar zu machen.

Dementsprechend weit zu fassen ist auch der Begriff des "Abbildes". Neben einem zwei- oder dreidimensionalen Bild mit optischen Bilddaten kann dieser Begriff beispielsweise auch ein-, zwei- oder mehrdimensionale Informationen über die Zufallsstrukturen umfassen, wie beispielsweise Daten einer Röntgenuntersuchung. Dieses Abbild soll derart eingerichtet und gewählt sein, dass es eine Unterscheidung der Zufallsstruktur eines pharmazeutischen Behältnisses von der Zufallsstruktur eines anderen pharmazeutischen Behältnisses ermöglicht. Dabei kann das Abbild jeweils Rohdaten umfassen und/oder bereits abgeleitete bzw. aufbereitete Daten, wie beispielsweise gefilterte Daten oder Daten, welche einer Datenreduktion unterworfen wurden. Hierzu sind aus dem Bereich der Bildverarbeitung zahlreiche Verfahren bekannt. Insbesondere kann die Zufallsstruktur beispielsweise bereits derart identifiziert werden, dass Positions- und/oder Richtungsinformationen charakteristischer Elemente dieser Zufallsstrukturen (beispielsweise von Gaseinschlüssen und/oder Fasern) erkannt und abgespeichert werden. Besonders einfach ist dies im Rahmen von Einschlüssen als Zufallsstrukturen, wie beispielsweise Bläschen. Hier können beispielsweise die Größe und/oder Position der Bläschen mittels einer Bildverarbeitung erkannt und beispielsweise lediglich diese Informationen als "Abbild" aufgenommen werden.

Das mindestens eine erste Abbild der Zufallsstruktur wird, wie beschrieben, in mindestens einer Datenbank hinterlegt. Diese Datenbank kann insbesondere auf einen flüchtigen und/oder einem nichtflüchtigen Datenspeicher gespeichert sein. Auch eine Speicherung auf einem Computer oder in einem Computernetzwerk ist möglich. Die Datenbank kann beispielsweise eine einfache elektronische Tabelle umfassen, beispielsweise eine Tabelle, welche als ein Datenblock (beispielsweise eine Spalte) die genannten Positionsinformationen der Bläschenstruktur bzw. einer anderen Art von Zufallsstruktur aufnehmen kann. Auch komplexere Arten von Datenbanken sind jedoch selbstverständlich einsetzbar und dem Fachmann bekannt. Das Hinterlegen des Abbildes kann beispielsweise direkt oder indirekt erfolgen, beispielsweise über einen drahtlosen und/oder einen drahtgebundenen Zugriff auf ein Speichermedium, auf welchem die Datenbank gespeichert ist. Die Datenbank kann hier für in räumlicher Nähe zu einer Abfüllanlage angeordnet sein oder in Entfernung. In letzterem Fall kann der Zugriff auch beispielsweise über ein Netzwerk, beispielsweise das Internet, erfolgen, so dass die Datenbank beispielsweise auch zentralisiert für mehrere Abfüllanlagen eingerichtet werden kann.

Weiterhin erfolgt bei dem erfindungsgemäßen Verfahren in mindestens einem Abfüllschritt ein Einbringen mindestens eines pharmazeutischen Materials in das pharmazeutische Behältnis. Dieses Einbringen bzw. Abfüllen kann insbesondere automatisiert erfolgen, wobei grundsätzlich alle bekannten Abfülltechniken einsetzbar sind. Da intrinsische Zufallsstrukturen des pharmazeutischen Behältnisses eingesetzt werden, ist das vorgeschlagene Verfahren breit einsetzbar und kann beispielsweise auch für Abfülltechniken verwendet werden, welche unter aggressiven Bedingungen (beispielsweise Vakuum und/oder erhöhte Temperaturen und/oder unter Verwendung aggressiver Chemikalien) stattfinden, denen herkömmliche Markierungsverfahren, wie beispielsweise Druckverfahren, nicht standhalten würden.

In einem weiteren Verfahrensschritt wird mindestens eine Information über das pharmazeutische Material in der Datenbank hinterlegt und dem ersten Abbild der Zufallsstruktur zugeordnet. Das erste Abbild der Zufallsstruktur wirkt somit als eindeutiger Identifikator, ähnlich beispielsweise einer eindeutigen Seriennummer. Das Verfahren sollte dabei derart durchgeführt werden, dass jedes Abbild lediglich einmal auftritt, so dass sich die Abbilder sämtlicher pharmazeutischer Behältnisse voneinander unterscheiden. Dies soll durch den Begriff "eindeutige Zufallsstruktur" impliziert sein. Durch dieses Zuordnen der mindestens einen Information über das pharmazeutische Material zu dem ersten Abbild ist somit jedem pharmazeutischen Behältnis mindestens eine Information über das pharmazeutische Material, welches in dem pharmazeutischen Behältnis enthalten ist, vorzugsweise eindeutig zugeordnet.

Diese mindestens eine Information über das pharmazeutische Material kann beispielsweise mindestens eine der folgenden Informationen umfassen: eine Chargennummer, insbesondere eine Chargennummer bzw. Losnummer des pharmazeutischen Materials; eine Dosierung mindestens eines in dem pharmazeutischen Material enthaltenen Wirkstoffs; eine Menge des pharmazeutischen Materials; eine Menge mindestens eines in dem pharmazeutischen Material enthaltenen Wirkstoffs; ein Abfülldatum; eine Information über eine Abfülllinie. Auch Kombination der genannten Informationen können enthalten sein, sowie gegebenenfalls weitere Arten von Informationen.

Das Ergebnis des genannten Verfahrens ist somit eine Datenbank, in welcher jedem pharmazeutischen Behältnis eindeutig eine Information hinsichtlich des darin enthaltenen pharmazeutischen Materials zugeordnet ist. Gleichzeitig ist jedoch diese Information jederzeit wieder auslesbar, da jederzeit ein weiteres Abbild der Zufallsstruktur eines pharmazeutischen Behältnisses gewonnen und anhand der Datenbank die Information über das pharmazeutische Material in diesem pharmazeutischen Behältnis ausgelesen werden kann.

Das vorgeschlagene Verfahren kommt somit vorzugsweise ohne die eingangs genannten Markierungsverfahren, beispielsweise die Druckverfahren und/oder Lasermarkierungsverfahren, aus. Insofern kann auf diese aufwendigen Markierungsschritte verzichtet werden, was das Verfahren stark vereinfacht und den apparativen Aufwand für das vorgeschlagene Verfahren stark vermindert. Erfindungsgemäß kann insbesondere auf eine "aktive" Codierung der pharmazeutischen Behältnisse verzichtet werden, indem die in dem Werkstoff ohnehin enthaltenen Zufallsstrukturen detektiert und datentechnisch konserviert werden. Alternativ oder zusätzlich kann das Vorhandensein der Zufallsstrukturen in dem Werkstoff jedoch auch besonders gefördert werden, beispielsweise durch entsprechende Wahl der Herstellungsbedingungen. Weiterhin bietet insbesondere die Verwendung von Gasbläschen und/oder eingeschlossenen Partikeln als Zufallsstrukturen den Vorteil, dass diese Art der Zufallsstrukturen mit vernachlässigbarer Wahrscheinlichkeit in zwei verschiedenen pharmazeutischen Behältnissen identisch ist. Beispielsweise können Gasbläschen und/oder eingeschlossene Partikel in der Fingerauflage eines Spritzenkörpers detektiert werden. Diese Einschlüsse sind sehr klein, untereinander weitgehend von der gleichen Größe und statistisch verteilt. Durch Aufnahme der pro Behältnis einzigartigen Struktur kann ein individueller "Fingerabdruck" des Behältnisses, insbesondere eines Glasbehältnisses, über ein Bildverarbeitungs- und/oder Datenbanksystem verwaltet und immer wieder dem gleichen Behältnis zugewiesen werden.

Ein weiterer Vorteil des erfindungsgemäßen Verfahrens besteht darin, dass dieses vollständig im Hause des pharmazeutischen Herstellers durchgeführt werden kann. Die Zufallsstruktur kann beispielsweise vor dem Abfüllprozess detektiert werden, und es können Daten beispielsweise betreffend des Inhalts des detektierten pharmazeutischen Behältnisses zusammen mit den Behälterdaten (beispielsweise in Form von Bilddaten und/oder Zahlenwerten) in der Datenbank hinterlegt werden. Insofern ist das beschriebene Verfahren beispielsweise unabhängig vom Zulieferer des pharmazeutischen Behältnisses, wie dies beispielsweise bei bereits vorgefertigten Seriennummern oder ähnlichem der Fall wäre. Durch das beschriebene Verfahren werden grundsätzlich vorzugsweise keinerlei Prozess- oder Verfahrensschritte des pharmazeutischen Herstellers beeinflusst. Dies bedeutet insbesondere, dass beispielsweise keine erhebliche Modifikation bestehender Abfüllanlagen erforderlich ist und/oder dass in der Regel keine neue Zertifizierung eines Abfüllprozesses durchgeführt werden muss.

Das erfindungsgemäße Verfahren bietet weiterhin den Vorteil, dass die Codierung des Behältnisses mittels der Zufallsstruktur in der Regel keinerlei Auswirkungen auf das Füllmedium aufweist bzw. aufweisen kann. Dieser Vorteil macht sich insbesondere im Bereich der Lebensmittelverpackungen und im Bereich der pharmazeutischen Behältnisse bemerkbar. Da auf eine "aktive Markierung" zur Codierung verzichtet werden kann, im Gegensatz beispielsweise zu Druckverfahren und/oder Laserbeschriftungsverfahren, muss bei erfindungsgemäß mittels Zufallsstrukturen codierten Behältnissen auch nicht nachgewiesen werden, dass das Verfahren keinen negativen Einfluss auf das Füllmaterial hat. Bei aktiven Beschriftungen im Bereich der Pharmazie muss ansonsten beispielsweise durch aufwändige Tests nachgewiesen werden, dass der "API" (active pharmazeutical ingredient, Wirkstoffinhalt) durch die Markierung bzw. Codierung nicht beeinflusst wird. Dies kann durch Verwendung des erfindungsgemäßen Verfahrens entfallen.

Weiterhin bietet das genannte Verfahren den Vorteil, dass eine so genannte "Line Clearance" (Linienfreigabe) durchgeführt werden kann, welche insbesondere zur Sicherstellung eines Untermischungsschutzes genutzt werden kann. Eine derartige Line Clearance beinhaltet eine Abfrage, ob alle Behältnisse, die in die eine Abfüllvorrichtung eingegeben worden sind bzw. an eine derartige Vorrichtung bereitgestellt worden sind, diese Vorrichtung auch wieder verlassen haben. Wird beispielsweise von einem bestimmten Füllmedium auf ein anderes Füllmedium umgestellt, so kann auf diese Weise sichergestellt werden dass sich bei Abfüllung des neuen Füllmediums nicht noch alte, mit dem vorherigen Füllmedium befüllte Behältnisse in der Vorrichtung befinden. Wird hingegen festgestellt, dass dies doch der Fall ist, so kann gezielt der Abfüllprozess beispielsweise unterbrochen und beispielsweise manuell nach dem Behältnis gesucht werden.

Die Line Clearance bzw. die Kontrolle, ob alle Behältnisse die Vorrichtung verlassen haben, kann beispielsweise derart erfolgen, dass (beispielsweise an einem Ausgabeende der Vorrichtung) erneut Abbilder der Zufallsstrukturen aller ausgegebenen Behältnisse gewonnen werden und mit Datenbankeinträgen verglichen werden. Dies kann beispielsweise nahezu analog zu dem unten beschriebenen Authentifizierungsverfahren erfolgen. Beispielsweise kann zu jedem Datenbankeintrag bei Identifikation einer Ausgabe eines bestimmten Behältnisses ein Eintrag "ausgegeben" hinzugefügt werden. Schließlich kann kontrolliert werden, ob beispielsweise alle Behältnisse einer Abfüllcharge über einen derartigen Eintrag verfügen, beispielsweise vor Umstellung der Produktion auf eine andere Charge. Auch andere Arten der Line Clearance sind möglich, beispielsweise das Verzeichnen der Abbilder ausgegebener Behältnisse auf einer separaten Ausgabeliste und ein anschließender Vergleich mit den Datenbankeinträgen oder einer separaten Eingabeliste. Verschiedene Verfahrensvarianten sind denkbar. Auf diese Weise kann effizient und sicher eine Line Clearance durchgeführt werden und ein Untermischungsschutz sichergestellt werden.

Ein weiterer Vorteil des genannten Verfahrens besteht darin, dass die Nutzung von Zufallsstrukturen auch der Fälschungssicherung dient. Da die Zufallsstrukturen quasi als "Fingerabdruck" des pharmazeutischen Behältnisses, beispielsweise des Glasgefäßes, dienen, und da sich diese einzigartigen Strukturen nicht leicht künstlich reproduzieren lassen, ist eine Fälschung pharmazeutischer Behältnisse und/oder der darin enthaltenen Füllmedien praktisch nicht möglich bzw. es lassen sich Fälschungen leicht detektieren. Weiterhin lassen sich die pharmazeutischen Behältnisse und deren Inhalt lückenlos aufgrund der Zufallsstrukturen zurückverfolgen, so dass beispielsweise ein sogenannter "Stammbaumnachweis" (track and trace or pedigree; Registrierung eines Weges einer Packung vom Produzenten bis zum Kunden durch die "Supply Chain") erstellbar ist.

Das vorgeschlagene erfindungsgemäße Verfahren kann auf verschiedene Weisen vorteilhaft weitergebildet werden. Diese vorteilhaften Weiterbildungen, welche einzeln oder in Kombination realisiert werden können, sind in den Unteransprüchen dargestellt. So kann - wie oben bereits ausgeführt - die Zufallsstruktur mindestens eine Struktur von Einschlüssen in dem Werkstoff umfassen. Insbesondere sind hierbei Gaseinschlüsse, wie beispielsweise Luftbläschen oder Einschlüsse von Feststoffpartikeln bevorzugt. Derartige Zufallsstrukturen mit Einschlüssen, insbesondere Gaseinschlüssen, lassen sich auf optischem Wege besonders leicht detektieren, beispielsweise durch die Detektion von Streulicht.

In einer weiteren bevorzugten Verfahrensvariante wird das erste Abbild in einer Datenstruktur umgewandelt, welche in der Datenbank hinterlegt werden kann. Diese Datenstruktur kann beispielsweise das ursprüngliche erste Abbild der Zufallsstruktur ersetzen und/oder zusätzlich zu diesem ersten Abbild der Zufallsstruktur hinterlegt werden. Auf die möglichen Ausgestaltungen des "ersten Abbildes", welche oben beschrieben wurden, kann an dieser Stelle verwiesen werden. Diese Umwandlung in eine Datenstruktur kann auch bezüglich einer oder mehrerer der unten beschriebenen weiteren Abbilder (zum Beispiel zweites Abbild, drittes Abbild) vorteilhaft angewandt werden. Die Datenstruktur kann beispielsweise mindestens eine Ortsinformation über die Zufallsstruktur umfassen, insbesondere mindestens eine Ortsinformation über Einschlüsse in dem Werkstoff. Beispielsweise können mittels einer Bilderkennungs-Software in einem zweidimensionalen oder dreidimensionalen Bild des Behältnisses und/oder eines Teils des pharmazeutischen Behältnisses (beispielsweise einer Fingerauftage) Einschlüsse, insbesondere Gasbläschen und/oder eingeschlossene Partikel erkannt werden. Die Datenstruktur kann dann beispielsweise die erkannten Mittelpunkte dieser Einschlüsse beinhalten und/oder Radien dieser (in der Regel kreisförmigen) Einschlüsse. Zwischen dem ursprünglichen Abbild und einer daraus abgeleiteten Datenstruktur wird im Folgenden begrifflich nicht mehr unterschieden, da beide im Idealfall einen universellen und eindeutigen Identifikator eines bestimmten pharmazeutischen Behältnisses darstellen.

Neben dem bereits erwähnten ersten Identifikationsschritt kann weiterhin mindestens ein zweiter Identifikationsschritt durchgeführt werden. Dieser zweite Identifikationsschritt, welcher vorzugsweise nach Beendigung des Abfüllvorgangs (also nach Einbringen des pharmazeutischen Materials in das pharmazeutische Behältnis) durchgeführt wird, dient einer "Wiedererkennung" des bereits zuvor identifizierten Behältnisses. Zu diesem Zweck wird in dem zweiten Identifikationsschritt mindestens ein zweites Abbild der Zufallsstruktur gewonnen und das zweite Abbild mit in der Datenbank hinterlegten ersten Abbildern verglichen. Auch aus diesem zweiten Abbild kann wiederum auch eine weitere Datenstruktur abgeleitet werden. Der Vergleich kann durch einen vollständigen oder teilweisen Vergleich der Abbilder bzw. Datenstrukturen erfolgen. Der Vergleich kann beispielsweise mittels eines Korrelationsverfahrens und/oder eines Mustererkennungsverfahrens durchgeführt werden. Auch andere Arten von Vergleichsverfahren sind jedoch alternativ oder zusätzlich einsetzbar. Der zweite Identifikationsschritt, insbesondere der Vergleich der Abbilder bzw. Datenstrukturen, kann ganz oder teilweise an unterschiedlichen Orten erfolgen, beispielsweise am Ort einer Abfülllinie und/oder am Ort der Datenbank (wobei die Datenbank am Ort der Abfülllinie oder an einem anderen Ort angeordnet sein kann). Nach Durchführung dieses zweiten Identifikationsschritts ist somit nunmehr bekannt, welches pharmazeutische Behältnis gerade vorliegt, gemeinsam mit den in der Datenbank umfassten Informationen über dieses spezielle pharmazeutische Behältnis bzw. dessen Inhalt.

Dies kann beispielsweise genutzt werden, um anschließend das pharmazeutische Behältnis zu etikettieren. Somit kann ein (beispielsweise optisch und/oder elektronisch auslesbares) Etikett auf dem pharmazeutischen Behältnis aufgebracht werden, welches ganz oder teilweise die Information über das pharmazeutische Material umfasst. Beispielsweise kann dieses Etikett ein bedrucktes und/oder auf andere Weise beschriftetes Papier- und/oder Kunststoffetikett umfassen, welches auf das pharmazeutische Behältnis aufgeklebt wird und maschinenlesbare und/oder durch einen Menschen lesbare Informationen umfasst. Alternativ oder zusätzlich kann auch ein elektronisches Etikett verwendet werden, beispielsweise ein Hochfrequenz-Etikett (RFID-Etikett). Alternativ oder zusätzlich zu einer Etikettierung kann auch eine Beschriftung unmittelbar auf das pharmazeutische Behältnis erfolgen, wobei beispielsweise wiederum auf die oben beschriebenen Markierungsverfahren verwiesen werden kann. Beispielsweise kann diese Beschriftung mittels eines Tintenstrahlverfahrens, eines Lasermarkierungsverfahrens, eines Thermotransferverfahrens, eines Siebdruckverfahrens oder eines anderen Verfahrens erfolgen.

Ein großer Vorteil dieser vorgeschlagenen Verfahrensvariante, bei welcher zunächst ein anonymer Code verwendet wird, um anschließend - unter Zuhilfenahme des zweiten Identifikationsschrittes und der Datenbank - eine Herkömmliche Etikettierung vornehmen zu können, besteht darin, dass diese Etikettierung bzw. Beschriftung nunmehr nach dem Abfüllvorgang erfolgt, also zu einem Zeitpunkt, zu welchem in der Regel das befüllte pharmazeutische Behältnis keinen rauhen Umgebungsbedingungen mehr ausgesetzt sein sollte. Dies senkt die Anforderungen an die Beständigkeit der Beschriftung bzw. des Etiketts erheblich, so dass auch empfindliche Etiketten (z.B. Hochfrequenzetiketten) bzw. Beschriftungen verwendet werden können und dass somit auch eine größere Auswahl an möglichen Beschriftungs- bzw. Etikettierverfahren zur Verfügung steht. Dennoch ist gleichzeitig ein Untermischungsschutz gewährleistet, da mittels des "Fingerabdrucks" der Zufallsstrukturen zu jedem Zeitpunkt Gewissheit über die Identität des Behältnisses und/oder seines Inhalts besteht.

Neben dem vorgeschlagenen Verfahren zur Befüllung von Behältnissen, insbesondere pharmazeutischen Behältnissen, wird weiterhin eine Vorrichtung zur Befüllung von Behältnissen, insbesondere pharmazeutischen Behältnissen, vorgeschlagen, welche insbesondere eingerichtet sein kann, um ein Verfahren nach einer oder mehrerer der oben beschriebenen Ausführungsformen durchzuführen. Insofern kann für Begriffsdefinitionen und mögliche Ausgestaltung der Vorrichtung weitgehend auf die obige Beschreibung verwiesen werden. Wiederum werden im Folgenden, ohne Beschränkung der erfindungsgemäßen weiteren Möglichkeiten der Verwendung anderer Behältnisse und/oder anderer Füllmedien, die Begriffe "pharmazeutisches Behältnis" und "pharmazeutisches Material" verwendet.

Die Vorrichtung umfasst mindestens eine Datenbank und mindestens eine Bereitstellvorrichtung zum Bereitstellen eines pharmazeutischen Behältnisses. Eine derartige Bereitstellvorrichtung wurde oben bereits beschrieben und kann beispielsweise einen Line-Filler oder Tray-Filler beinhalten. Wiederum soll das pharmazeutische Behältnis derart ausgestaltet sein, dass dieses mindestens einen Werkstoff (beispielsweise eine Fingerauflage eines Glas-Spritzenkörpers) mit einer Zufallsstruktur (beispielsweise einer Bläschenstruktur) umfasst. Für mögliche Ausgestaltungen kann auf das oben Gesagte verwiesen werden.

Weiterhin weist die Vorrichtung mindestens eine Identifikationsvorrichtung zur Durchführung mindestens eines ersten Identifikationsschritts auf. In dem ersten Identifikationsschritt wird mindestens ein Abbild der Zufallsstruktur gewonnen und in der Datenbank hinterlegt. Die erste Identifikationsvorrichtung kann insbesondere eingerichtet sein, um den oben beschriebenen ersten Identifikationsschritt durchzuführen, beispielsweise mittels einer optischen Aufnahmetechnik. Insbesondere kann die erste Identifikationsvorrichtung ein Mikroskop umfassen.

Weiterhin umfasst die Vorrichtung mindestens eine Abfüllvorrichtung zum Einbringen mindestens eines pharmazeutischen Materials in das pharmazeutische Behältnis. Diese Abfüllvorrichtung kann beispielsweise an die Art des pharmazeutischen Materials und dessen Eigenschaften angepasst sein und kann beispielsweise ein oder mehrere Abfüllstutzen umfassen, um pharmazeutische Materialien flüssiger und/oder gasförmiger und/oder fester Natur in das pharmazeutische Behältnis einzubringen.

Die Vorrichtung ist weiterhin eingerichtet, um mindestens eine Information über das pharmazeutische Material in der Datenbank zu hinterlegen und dem Abbild der Zufallsstruktur zuzuordnen. Für diese mindestens eine Information und mögliche Ausgestaltungen dieser mindestens einen Information kann beispielsweise wiederum auf die obige Beschreibung verwiesen werden.

Neben dem beschriebenen Verfahren zur Befüllung der pharmazeutischen Behältnisse und der Vorrichtung wird weiterhin eine Datenbank vorgeschlagen, welche mindestens ein Abbild einer Zufallsstruktur eines Werkstoffs eines Behältnisses, insbesondere eines pharmazeutischen Behältnisses, umfasst. Wiederum werden im Folgenden, ohne Beschränkung der weiteren Möglichkeiten der Verwendung anderer Behältnisse und/oder anderer Füllmedien, die Begriffe "pharmazeutisches Behältnis" und "pharmazeutisches Material" verwendet.

Die Datenbank kann insbesondere auf einem flüchtigen und/oder nichtflüchtigen Datenspeicher bzw. Speichermedium gespeichert sein. Weiterhin umfasst die Datenbank mindestens eine Information über mindestens ein in das pharmazeutische Behältnis eingebrachtes pharmazeutisches Material, so dass wiederum jedem Abbild eindeutig eine Information zugeordnet ist. Für mögliche Ausgestaltungen des Abbildes sowie der mindestens einen Information kann wiederum auf die obige Beschreibung verwiesen werden, da die Datenbank insbesondere ein Ergebnis des oben beschriebenen Verfahrens zur Befüllung der pharmazeutischen Behältnisse sein kann bzw. durch dieses Verfahren erzeugt werden kann. Die Datenbank kann insbesondere im Rahmen eines derartigen Verfahrens verwendet werden und auf diese Weise erzeugt und/oder modifiziert werden.

Neben dem beschriebenen Verfahren zur Befüllung der pharmazeutischen Behältnisse, der Vorrichtung zur Befüllung der pharmazeutischen Behältnisse und der Datenbank wird weiterhin ein Authentifizierungsverfahren zur Authentifizierung mindestens eines mit mindestens einem Füllmedium, insbesondere mindestens einem pharmazeutischen Material, befüllten Behältnisses, insbesondere eines pharmazeutischen Behältnisses, vorgeschlagen. Wiederum werden im Folgenden, ohne Beschränkung der weiteren Möglichkeiten der Verwendung anderer Behältnisse und/oder anderer Füllmedien, die Begriffe "pharmazeutisches Behältnis" und "pharmazeutisches Material" verwendet.

Das pharmazeutische Behältnis ist dabei nach dem oben beschriebenen Verfahren zur Befüllung von pharmazeutischen Behältnissen mit mindestens einem pharmazeutischen Material befüllt, so das bezüglich möglicher Ausgestaltungen des Befüllungsverfahrens auf die obige Beschreibung verwiesen werden kann.

Das Authentifizierungsverfahren umfasst einen dritten Identifikationsschritt, in welchem mindestens ein drittes Abbild (bzw. wiederum eine aus diesem dritten Abbild abgeleitete Datenstruktur) der Zufallsstruktur gewonnen wird. In mindestens einem Vergleichsschritt des Authentifizierungsverfahrens wird dann dieses dritte Abbild mit in der Datenbank hinterlegten ersten Abbildern verglichen. Dieser Vergleich kann wiederum durch einen vollständigen oder teilweisen Vergleich der Abbilder bzw. Datenstrukturen erfolgen. Der Vergleich der Abbilder bzw. Datenstrukturen kann wiederum ganz oder teilweise an unterschiedlichen Orten erfolgen, beispielsweise am Ort einer Abfülllinie und/oder am Ort der Datenbank (wobei die Datenbank am Ort der Abfülllinie oder an einem anderen Ort angeordnet sein kann). Mit anderen Worten wird dabei danach gesucht, ob das speziell gerade zu identifizierende pharmazeutische Behältnis bereits in der Datenbank gespeichert ist. Wird in diesem Vergleichsschritt festgestellt, dass kein zu dem dritten Abbild passendes erstes Abbild ermittelt wird, d.h. dass mit hoher Wahrscheinlichkeit das pharmazeutische Behältnis nicht in der Datenbank erfasst ist, so kann daraus geschlossen bzw. erkannt werden, dass das pharmazeutische Behältnis nicht authentisch ist bzw. mit hoher Wahrscheinlichkeit nicht authentisch ist. Unter "authentisch" sind dabei pharmazeutische Behältnisse zu verstehen, welche von einem bestimmten Hersteller und/oder Abfüller und/oder einem legalisierten bzw. autorisierten Abfüller für die spezielle Abfüllung des pharmazeutischen Materials autorisiert worden sind. Auf diese Weise kann mittels des Vergleichsschrittes eine Fälschungssicherung gewährleistet werden, da Fälschungen infolge ihres fehlenden Datenbankeintrags leicht erkannt werden können. Wird eine derartige Fälschung erkannt, d.h. wird erkannt, dass das pharmazeutische Behältnis nicht authentisch ist, so kann beispielsweise eine Warnung an einen Benutzer, beispielsweise einen Benutzer einer Authentifizierungsanlage zur Durchführung des Authentifizierungsverfahrens, ausgegeben werden, oder es können bestimmte Aktionen (beispielsweise eine Aussonderung dieses pharmazeutischen Behältnisses) vorgenommen bzw. initiiert werden. Das Authentifizierungsverfahren kann beispielsweise auch bei Kundenreklamationen eingesetzt werden oder kann auch in größeren Labors oder Krankenhäusern, in welchem das pharmazeutische Material eingesetzt werden soll, durchgeführt werden, um Fälschungen zu erkennen.

Neben dem Authentifizierungsverfahren wird weiterhin eine Authentifizierungseinrichtung vorgeschlagen, welche eingerichtet ist, um das Authentifizierungsverfahren in einer der beschriebenen Ausführungsformen durchzuführen. Wiederum werden im Folgenden, ohne Beschränkung der weiteren Möglichkeiten der Verwendung anderer Behältnisse und/oder anderer Füllmedien, die Begriffe "pharmazeutisches Behältnis" und "pharmazeutisches Material" verwendet.

Die Authentifizierungseinrichtung kann insbesondere ausgestaltet sein, um eine Vielzahl von pharmazeutischen Behältnissen zu prüfen und zu erkennen, ob diese authentisch sind. Zu diesem Zweck kann beispielsweise wiederum eine Detektionsvorrichtung zur Erkennung der Zufallsstruktur vorgesehen sein, wobei für die Gewinnung des dritten Abbildes der Zufallsstruktur beispielsweise wiederum auf die oben beschriebenen Möglichkeiten zur Erkennung der Zufallsstruktur bzw. der Generierung eines Abbildes dieser Zufallsstruktur verwiesen werden kann. Die Authentifizierungseinrichtung kann mindestens eine Vergleichseinrichtung (beispielsweise mindestens einen Prozessor und/oder mindestens einen Computer bzw. ein Computernetzwerk) umfassen, welche eingerichtet ist, um die dritten Abbilder wiederum zumindest partiell (d.h. zumindest einen Teil dieser Abbilder) mit den in der Datenbank gespeicherten ersten Abbildern zu vergleichen. Diese Vergleichseinrichtung kann auch dezentral ausgestaltet sein. So kann beispielsweise der Vergleich beispielsweise unmittelbar an dem Ort durchgeführt werden, an welchem das dritte Abbild gewonnen wird, beispielsweise an einem Ort, an dem eine dritte Identifikationsvorrichtung zur Erzeugung des dritten Abbildes angeordnet ist, beispielsweise in einem dieser dritten Identifikationsvorrichtung zugeordneten Prozessor und/oder Computer. In diesem Fall können beispielsweise über eine drahtlose und/oder drahtgebundene Datenleitung erste Abbilder bzw. Datenstrukturen von der Datenbank bezogen werden. Alternativ oder zusätzlich kann der Vergleich auch am Ort der Datenbank durchgeführt werden, wobei die Vergleichseinrichtung unmittelbar auf die in dieser Datenbank hinterlegten ersten Abbilder zugreifen und diese mit dem dritten Abbild vergleichen kann. Insbesondere in letzterem Fall können die Datenbank und/oder ein auf diese Datenbank (beispielsweise über eine drahtgebundene und/oder drahtlose Datenleitung) zugreifender Computer bzw. Prozessor ganz oder teilweise Bestandteil der Authentifizierungseinrichtung sein. Die Datenbank kann dabei beispielsweise wiederum als zentrale Datenbank eingerichtet sein, auf die auch mehrere Authentifizierungseinrichtungen zugreifen können. Die für die Authentifizierung verwendete Datenbank kann ganz oder teilweise identisch zu der bei dem zuvor beschriebenen Verfahren zur Befüllung von pharmazeutischen Behältnissen erzeugten bzw. verwendeten Datenbank sein. Alternativ kann es sich bei der für die Authentifizierung verwendeten Datenbank auch lediglich um eine dieser Datenbank abgeleitete zweite Datenbank handeln, welche beispielsweise nur einen Teil der Informationen enthält, also insbesondere beispielsweise lediglich die ersten Abbilder bzw. ersten Datenstrukturen, da für eine Authentifizierung in der Regel nicht alle Informationen erforderlich sind. In diesem Fall ist der Vergleich der dritten Abbilder mit den in der Datenbank bzw. zweiten Datenbank hinterlegten ersten Abbildern also ein indirekter Vergleich, da nicht unmittelbar auf die Datenbank, sondern auf eine von der Datenbank abgeleitete zweite Datenbank zugegriffen wird. Dies soll unter dem beschriebenen Vergleichsschritt ebenfalls erfasst sein.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Die Erfindung wird am Beispiel pharmazeutischer Behältnisse und pharmazeutischer Materialien beschrieben, was jedoch wiederum die Möglichkeiten der Verwendung anderer Behältnisse und/oder anderer Füllmedien nicht ausschließt.

### Im Einzelnen zeigt:

- Figur 1: ein Ausführungsbeispiel einer Vorrichtung zum Befüllen von pharmazeutischen Behältnissen;
- Figur 2: eine Draufsicht auf eine Fingerauflage eines Spritzenkörpers;
- Figur 3: ein schematisches Ausführungsbeispiel einer Datenbank;
- Figur 4: ein Ausführungsbeispiel einer Authentifizierungseinrichtung zur Authentifizierung von pharmazeutischen Behältnissen; und
- Figur 5: eine Darstellung eines Ausführungsbeispiels einer Identifikationsvorrichtung nach dem Dunkelfeld-Prinzip.

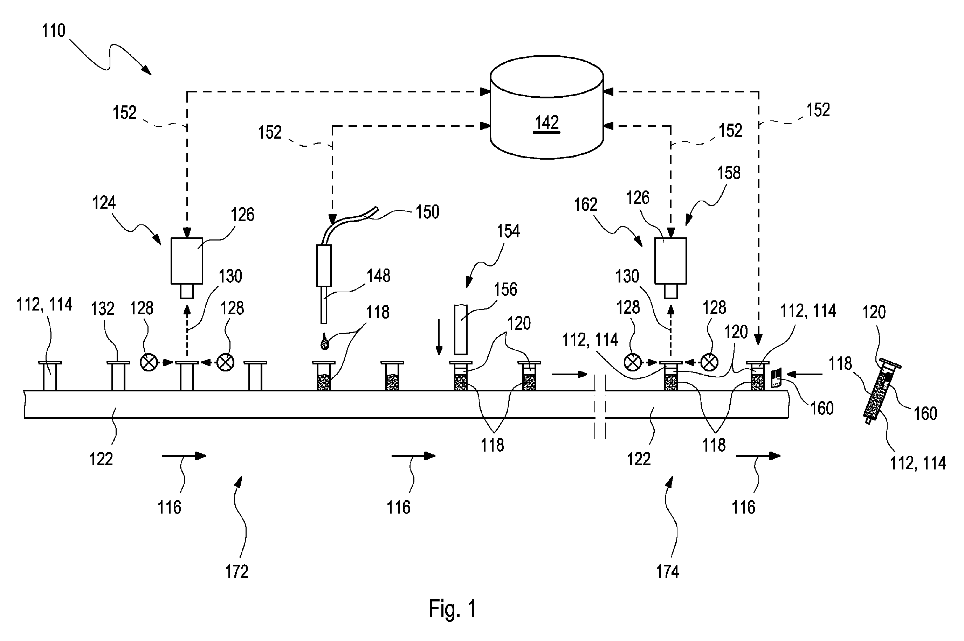

In Figur 1 ist schematisch ein Ausführungsbeispiel einer erfindungsgemäßen Vorrichtung 110 zur Befüllung von pharmazeutischen Behältnissen 112 dargestellt. Es wird darauf hingewiesen, dass diese Vorrichtung 110 lediglich stark schematisiert gezeigt ist und einige optionale Elemente umfasst. Weiterhin können zusätzliche, in Figur 1 nicht dargestellte Elemente von der Vorrichtung 110 umfasst sein. Anhand der Vorrichtung 110 soll im Folgenden auch ein Ausführungsbeispiel des erfindungsgemäßen Verfahrens zur Befüllung von pharmazeutischen Behältnissen erläutert werden.

Die Vorrichtung dient in dem dargestellten Ausführungsbeispiel der Befüllung von pharmazeutischen Behältnissen 112 in Form von Spritzenkörpern 114. Es sei jedoch darauf hingewiesen, dass auch andere Arten pharmazeutischer Behältnisse gemäß der obigen Beschreibung befüllt werden können.

Die Vorrichtung 110 ist in dem dargestellten Ausführungsbeispiel als sogenannter "Line-Filler" ausgestaltet. Hierbei durchlaufen die Spritzenkörper 114 in einer Laufrichtung 116 die Vorrichtung 110 und werden dabei nacheinander mit einem pharmazeutischen Material 118 befüllt. Es sei jedoch darauf hingewiesen, dass auch andere Ausgestaltungen der Vorrichtung 110 möglich sind, beispielsweise Vorrichtungen 110, bei welchen mehrere Spritzenkörper 114 gleichzeitig befüllt werden.

Optional kann die Vorrichtung 110 zunächst eine Reinigungsvorrichtung umfassen, in welcher die pharmazeutischen Behältnisse 112 gereinigt, beispielsweise gespült werden. Weiterhin kann die Vorrichtung 110 optional eine Silikonisierungseinrichtung umfassen, in welcher beispielsweise die Innenräume der Spritzenkörper 114 silikonisiert werden, um später die Bewegung eines Stopfens 120 innerhalb der Spritzenkörper 114 zu erleichtern.

Die optional derart präparierten Spritzenkörper werden anschließend durch eine Bereitstellvorrichtung 122 für eine Befüllung bereitgestellt. Die Bereitstellvorrichtung 122 ist in Figur 1 lediglich schematisch angedeutet und kann beispielsweise ein Laufband oder eine andere Art von Transportband oder Transporteinrichtung umfassen. Zu diesem Zweck können die Spritzenkörper 114 beispielsweise in Transporthülsen (in Figur 1 nicht dargestellt) aufgenommen werden.

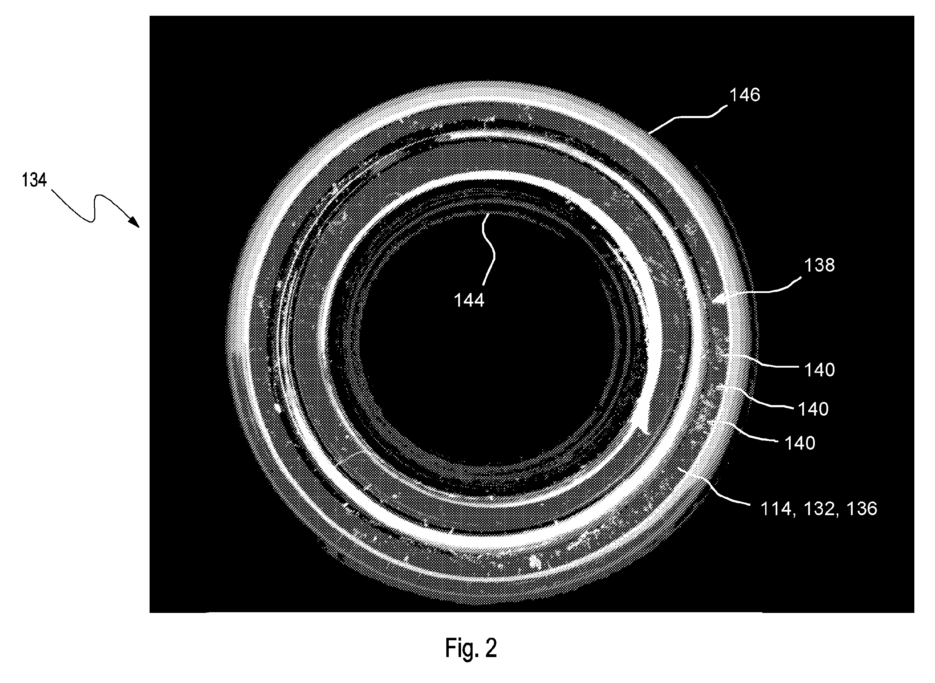

Mittels der Bereitstellvorrichtung 122 werden die Spritzenkörper 114 zu einer ersten Identifikationsvorrichtung 124 transportiert, um dort einem ersten Identifikationsschritt unterworfen zu werden. Die erste Identifikationsvorrichtung 124 ist in Figur 1 lediglich schematisch angedeutet und umfasst hier eine Kamera 126 sowie Beleuchtungseinrichtungen 128. Die Beleuchtungseinrichtungen 128 können beispielsweise eine Ringleuchte umfassen, mittels derer beispielsweise schräg zu einer Beobachtungsrichtung 130 Fingerauflagen 132 der Spritzenkörper 114 beleuchtet werden können. Die Fingerauflagen 132 sind beispielsweise ganz oder teilweise aus Glas hergestellt, wobei dieses Glas - bedingt durch einen Herstellungs- und/oder Konvertierungsprozess - eine Zufallsstruktur in Form von Gasbläschen, beispielsweise Luft- oder Gasbläschen, und/oder eingeschlossenen Partikeln aufweist. Diese Zufallsstruktur kann mittels der Kamera 126, welche beispielsweise eine Digitalkamera umfassen kann, erfasst werden. Diese Erfassung ist beispielhaft in Figur 2 dargestellt.

Figur 2 zeigt ein Beispiel eines mit der Kamera 126 aufgenommenen Abbildes 134 einer Fingerauflage 132. Die Beleuchtung erfolgt hier unter einer Beleuchtung durch die Beleuchtungseinrichtungen 128 mit einer Beleuchtungsrichtung schräg zur Blickrichtung der Kamera 126. Auch andere Beleuchtungsrichtungen sind jedoch prinzipiell denkbar, wobei die Beleuchtungsrichtung beispielsweise für einen optimalen Kontrast optimiert werden kann. Weiterhin sind in Figur 1 verschiedene Arten von Beleuchtungseinrichtungen 128 einsetzbar, beispielsweise Punktlichtquellen, Streulichtquellen, Ringlichtquellen, Laserlichtquellen oder Kombinationen dieser und/oder anderer Arten von Beleuchtungslichtquellen. Auch die Wellenlänge bzw. der Wellenlängenbereich der Emission dieser Lichtquellen ist anpassbar, so dass beispielsweise im ultravioletten und/oder infraroten und/oder sichtbaren Spektralbereich beleuchtet werden kann. Alternativ oder zusätzlich zu einer Bestrahlung mit Licht können auch andere Arten der Sichtbarmachung von Zufallsstrukturen verwendet werden. Das Glas der Fingerauflage 132 ist in Figur 2 symbolisch mit der Bezugsziffer 136 bezeichnet.

Deutlich ist dabei zu erkennen, dass im Inneren des Glases 136 eine Zufallsstruktur 138 in Form von Gaseinschlüssen 140 enthalten ist. Diese Gaseinschlüsse (im Folgenden auch als "Bläschen" bezeichnet) 140 und/oder andere Arten von Einschlüssen (was im Folgenden vom Begriff "Gasbläschen" mit umfasst sein soll) weisen in vielen Fällen einen ähnlichen Durchmesser auf. Zur besseren Sichtbarmachung von Strukturen im Abbild 134 kann das Abbild 134 auch nachbearbeitet werden und/oder in ein neues Abbild 134 umgewandelt werden, um die Identifizierung der Zufallsstrukturen 138 zu verbessern. So lassen sich beispielsweise Bildbearbeitungstechniken einsetzen, wie beispielsweise Invertierungen (Negativdarstellung), Filtertechniken, Mustererkennungen, Kontrastverstärkungen, Kantenverschärfungen oder ähnliche, dem Fachmann aus der Bildbearbeitung, Bildverarbeitung und Bilddatenanalyse bekannte Techniken.

Wie oben beschrieben, lässt sich die Detektion der Zufallsstrukturen und die Gewinnung des Abbildes 134 bzw. der weiteren, unten genannten Abbilder, durch eine geeignete Auf nahmetechnik zusätzlich verbessern. Verschiedene derartige Aufnahmetechniken sind beispielsweise aus dem Bereich der Mikroskopie bekannt. Als besonders vorteilhaft hat es sich erwiesen, eine Durchlicht-Aufnahmetechnik zu verwenden, welche auf dem aus der Mikroskopie bekannten Dunkelfeldprinzip beruht. Im Gegensatz zu beispielsweise Auf lichtverfahren, bei welchen reflektiertes Licht gemessen wird, wird bei der Dunkelfeldmethode das von der Lichtquelle kommende Licht an der Kamera 126 bzw. am Mikroskopobjektiv vorbei geleitet. Nur Licht, welches durch die Zufallsstrukturen 128 gestreut wird (beispielsweise im Rahmen einer Tyndall-Streuung), gelangt in das Objektiv bzw. die Kamera 126 und erzeugt dort ein Bild mit hellen Strukturen auf dunklem Untergrund.

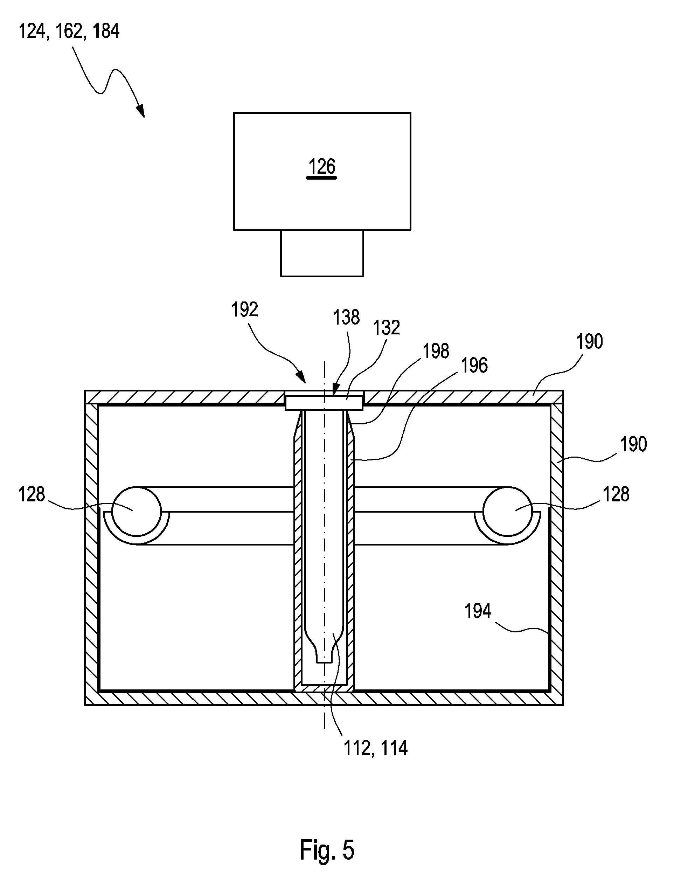

Ein Ausführungsbeispiel einer derartigen Dunkelfeld-Messung, welche im Rahmen der in Figur 1 dargestellten Vorrichtung 110 zur Erzeugung der Abbilder der Zufallsstrukturen 138 eingesetzt werden kann, ist in Figur 5 dargestellt. Wiederum wird eine Beleuchtungseinrichtung 128 in Form einer Ringlichtquelle verwendet, um ein gleichmäßiges, diffuses Licht zu erzeugen.

Wie aus Figur 5 hervorgeht, ist die Ringlichtquelle 128 in diesem Ausführungsbeispiel in einem Gehäuse 190 aufgenommen. Dieses Gehäuse 190 kann beispielsweise im Wesentlichen lichtdicht ausgestaltet sein, mit einer Öffnung 192 an ihrem oberen Ende. In seinem Inneren ist das Gehäuse 190 teilweise mit einer lichtabsorbierenden, schwarzen Beschichtung 194 versehen, um unerwünschte Reflexionen innerhalb des Gehäuses 190 zu vermeiden.

Weiterhin ist im Inneren des Gehäuses 190 eine Hülse 196 angeordnet, welche nach oben, d.h. zur Öffnung 192 hin geöffnet ist und welche an ihrem oberen Rand in diesem Ausführungsbeispiel Abschrägungen 198 aufweist. Diese Abschrägungen 198 dienen dem Zweck, dass eine Beleuchtung der Fingerauflage 132 durch die Hülse 196 nicht behindert werden soll.

In die Hülse 196 kann durch die Öffnung 192 ein Spritzenkörper 112 eingeschoben werden, derart, dass die Fingerauflage 132 dieses Spritzenkörpers 114 sowohl mittels einer über dem Gehäuse 190 befindlichen Kamera 126 beobachtet werden kann als auch durch die Beleuchtungseinrichtung 128 beleuchtet werden kann.

Die Anordnung der Beleuchtungseinrichtung 128 ist dabei derart, dass keine Lichtstrahlen direkt von der Beleuchtungseinrichtung 128 ins Objektiv der Kamera 126 gelangen können. Dennoch wird die Fingerauflage 132 vorzugsweise homogen beleuchtet, und Streueffekte, insbesondere der so genannte Tyndall-Effekt, kommen zum Tragen. Nur diejenigen Lichtstrahlen, welche an der Fingerauflage 132, insbesondere den Einschlüssen der Zufallsstrukturen 138, gestreut werden, gelangen somit in das Objektiv der Kamera 126 und werden als helle Lichtpunkte im Abbild 134 dargestellt. Insofern stellt die in Figur 5 gezeigte Anordnung eine bevorzugte Anordnung zum Sichtbarmachen von Zufallsstrukturen 138 dar.

Das Abbild 134 in Figur 2, welches beispielsweise in digitalisierter Form vorliegt, kann selbst bereits eine Datenstruktur darstellen und kann, beispielsweise von der Kamera 126 selbst oder einem zwischengeschalteten Computer (in Figur 1 nicht dargestellt) in einer Datenbank 142 gespeichert werden. Alternativ oder zusätzlich kann das Abbild 134 der Zufallsstruktur 138 des Glases 136 der Fingerauflage 132 in Figur 2 jedoch auch optional in eine vereinfachte Datenstruktur umgewandelt werden. Zu diesem Zweck kann beispielsweise eine Bilderkennungssoftware verwendet werden, mittels derer die Positionen der Gaseinschlüsse 140 erkannt werden. Diese Bilderkennung kann beispielsweise zunächst einen Innenrand 144 im Abbild 134 erkennen, welcher im Wesentlichen kreisförmig ausgestaltet ist, sowie einen Außenrand 146, welcher ebenfalls näherungsweise kreisförmig ausgebildet ist. Auf diese Weise kann beispielsweise ein Mittelpunkt der Kreise vom Innenrand 144 und Außenrand 146 bestimmt werden, und die Koordinaten der Gaseinschlüsse 140 können beispielsweise in Form von Polarkoordinaten (Abstand zum Mittelpunkt, Winkel) angegeben und als Vektorfeld gespeichert werden. Dieses Vektorfeld bildet dann eine Datenstruktur des Abbildes 134, welche im Vergleich zu den ursprünglichen Bilddaten des Abbildes 134 vom Umfang her stark reduziert ist. Diese reduzierte Datenstruktur kann alternativ oder zusätzlich zum Abbild 134 in der Datenbank 142 abgespeichert werden.

Sollen später zwei Abbilder 134 verschiedener bzw. gleicher Spritzenkörper 114 miteinander verglichen werden, so sind auch bei gleichen Spritzenkörpern 114 die Abbilder 134 mit hoher Wahrscheinlichkeit gegeneinander verdreht. Die Abstände der einzelnen Gaseinschlüsse 140 zum Mittelpunkt sind jedoch bei identischen Spritzenkörpern 114 zumindest näherungsweise gleich. Insofern kann es, um zu überprüfen, ob zwei Abbilder 134 von Spritzenkörpern 114 identisch sind, beispielsweise genügen, eine Korrelationsfunktion der reduzierten Datenstrukturen über den Winkel der Polarkoordinaten zu bilden. Bei identischen Spritzenkörpern 114 weist die Korrelationsfunktion im Idealfall bei einem bestimmten Winkel, nämlich genau dem Drehwinkel, unter welchem die Abbilder 134 gegeneinander verdreht sind, einen scharfen Peak auf. In der Praxis wird dieser scharfe Peak jedoch zumeist ein von seiner Höhe her etwas reduziertes, dafür verbreitertes Maximum sein. Für eine Bestimmung, ob zwei Spritzenkörper 114 bzw. deren Abbilder 134 identisch sind, könnte in diesem Fall beispielsweise eine Schwelle für dieses Korrelationsmaximum vorgegeben werden, welche überschritten werden muss, damit die Spritzenkörper 114 mit hoher Wahrscheinlichkeit (beispielsweise mit einer Wahrscheinlichkeit oberhalb einer gewissen Prozentschwelle) identisch sind.

Um den Vergleich der Spritzenkörper 114 zu erleichtern, könnte zusätzlich auch mindestens eine Markierung vorgesehen sein, welche die Überprüfung des Drehwinkels ermöglicht. So könnte beispielsweise jede Fingerauflage 132 ein oder mehrere Markierungen in Form von Linien, Kreuzen oder ähnlichem aufweisen, welche als Positionierungsmarkierungen verwendet werden können und/oder welche bei der späteren Auswertung bzw. beim Vergleich der Abbilder 134 genutzt werden. So können beispielsweise Abbilder 134 so lange gedreht werden (entweder tatsächlich oder virtuell), bis bestimmte Markierungen im Wesentlichen deckungsgleich sind.

Nach diesem ersten Identifikationsschritt durch die erste Identifikationsvorrichtung 124 werden die Spritzenkörper 114 zu einer Abfüllvorrichtung 148 transportiert. Mittels dieser Abfüllvorrichtung 148, welche in Figur 1 lediglich symbolisch dargestellt ist, wird das pharmazeutische Material 118 in die Spritzenkörper 114 eingefüllt. Dieses Abfüllen erfolgt in der Regel derart, dass gezielt eine vorgegebene Menge des pharmazeutischen Materials 118 und/oder eine vorgegebene Dosierung eines pharmazeutischen Wirkstoffs in jeden Spritzenkörper 114 eingebracht wird. Das pharmazeutische Material 118 kann beispielsweise über ein Schlauchsystem 150 bereitgestellt werden. Die Abfüllung kann dabei derart erfolgen, dass alle Spritzenkörper 114 nacheinander befüllt werden und/oder es können mehrere Spritzenkörper 114 gleichzeitig befüllt werden.

Ebenso wie die erste Identifikationsvorrichtung 124 über eine (drahtgebundene und/oder drahtlose) Datenleitung 152 direkt oder indirekt (beispielsweise über einen oder mehrere Computer) mit der Datenbank 142 verbunden ist, ist auch die Abfüllvorrichtung 148 über eine derartige Datenleitung 152 direkt oder indirekt mit der Datenbank 142 verbunden. Wiederum kann dies unter Zwischenschaltung eines oder mehrerer Computer und/oder Prozessoren erfolgen, wobei die Datenbank 142 auch Bestandteil dieses bzw. dieser Computer sein kann. Auf diese Weise kann die Vorrichtung 110 eingerichtet sein, um mindestens eine Information über das pharmazeutische Material 118 in der Datenbank 142 zu hinterlegen und diese Information dem Abbild 134 bzw. einer hieraus gewonnenen Datenstruktur (welche dann als Identifikator und/oder "Seriennummer" des Spritzenkörpers 114 wirkt) zuzuordnen.

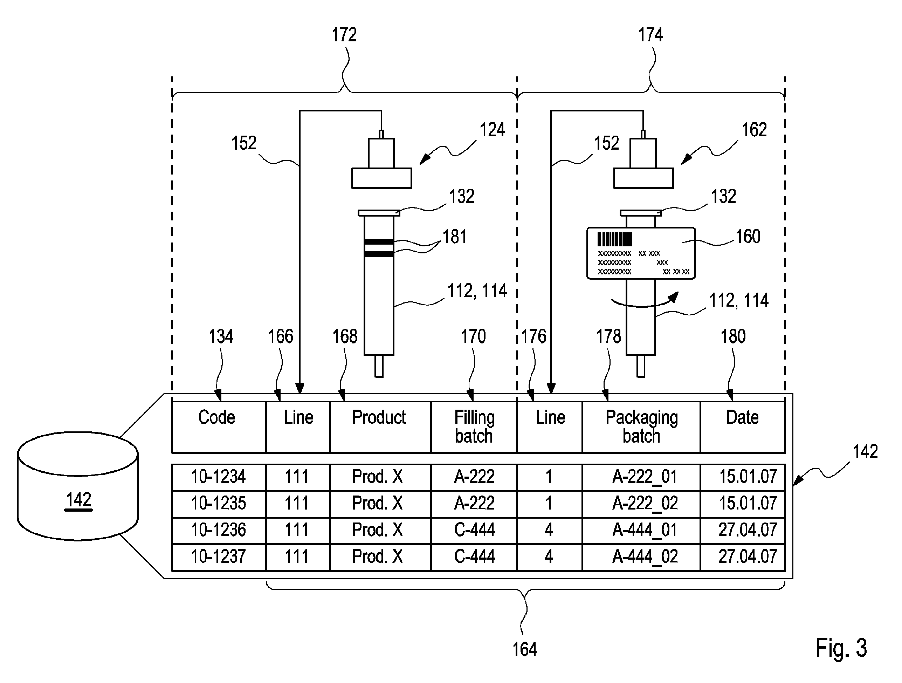

Es sei darauf hingewiesen, dass dies jedoch lediglich eine Möglichkeit der erfindungsgemäßen Idee darstellt, einem Spritzenkörper 114 mindestens eine Information über das pharmazeutische Material 118 zuzuordnen. Beispielsweise könnte die Abfüllvorrichtung 148 auch durch einen Computer gesteuert werden, wobei der Computer dann direkt oder indirekt auch den entsprechenden Eintrag der mindestens einen Information in der Datenbank 142 vornimmt. Besonders bevorzugt ist es dabei, wenn die erste Identifikationsvorrichtung 124 und die Abfüllvorrichtung 148 grundsätzlich derart zusammenwirken, dass jederzeit klar ist, welcher Spritzenkörper 114 bzw. welche Spritzenkörper 114 (bei einer gleichzeitigen Befüllung mehrerer Spritzenkörper 114) sich gerade in der Abfüllvorrichtung 148 befinden, so dass eine eindeutige Zuordnung der Informationen zu den Abbildern in der Datenbank 142 möglich ist. Dies kann beispielsweise durch ein getaktetes Weitertransportieren der Spritzenkörper 114 erfolgen, so dass beispielsweise nach einer bestimmten Anzahl von Takten ein spezifischer Spritzenkörper 114, welcher zuvor die erste Identifikationsvorrichtung 124 passiert hat, in der Abfüllvorrichtung 148 angelangt ist. Beispiele derartiger Datenbankeinträge werden unten anhand Figur 3 näher erläutert.

Nach Durchlaufen der Abfüllvorrichtung 148 werden die Spritzenkörper 114 zu einer optionalen Verschlussvorrichtung 154 transportiert. In diese Verschlussvorrichtung 154 werden mit Hilfe eines Kolbens 156 die Stopfen 120 in die befüllten Spritzenkörper 114 eingebracht. Damit ist das erfindungsgemäße Verfahren prinzipiell beendet, und es ist jeder Spritzenkörper 114 mit pharmazeutischem Material 118 befüllt und eindeutig identifiziert.

Optional kann die Vorrichtung 110 jedoch weiterhin eine Etikettiervorrichtung 158 umfassen, welche in Figur 1 ebenfalls lediglich symbolisch dargestellt ist. Diese Etikettiervorrichtung 158, welche beispielsweise ebenfalls an die Bereitstellvorrichtung 122 abstromseitig angeschlossen sein kann, dient der Aufbringung von lesbaren Etiketten 160 auf die befüllten Spritzenkörper 114. Diese Etiketten 160 können beispielsweise optisch und/oder elektronisch lesbare Etiketten umfassen, welche ganz oder teilweise die genannte Information über das pharmazeutische Material beinhalten, sowie gegebenenfalls Zusatzinformationen.

Zu diesem Zweck wird zunächst in einem zweiten Identifikationsschritt mittels einer zweiten Identifikationsvorrichtung 162 ein zweites Abbild der Zufallsstruktur jedes Spritzenkörpers 114 ermittelt. Diese zweite Identifikationsvorrichtung 162 kann prinzipiell identisch zur ersten Identifikationsvorrichtung 124 ausgestaltet sein, so dass beispielsweise auf die obige Beschreibung verwiesen werden kann, insbesondere beispielsweise auf die Beschreibung der Figur 5. Wiederum kann ein Abbild 134 gewonnen werden und unmittelbar und/oder nach Reduktion zu einer reduzierten Datenstruktur mit Einträgen in der Datenbank 142 oder einer von dieser Datenbank 142 abgeleiteten zweiten Datenbank (in Figur 1 nicht dargestellt) verglichen werden. Dieser Vergleich kann beispielsweise mittels des oben beschriebenen Vergleichsverfahrens erfolgen, beispielsweise mittels eines der beschriebenen Korrelationsverfahren. Wiederum können alternativ oder zusätzlich bei diesem Vergleichsverfahren auch Markierungen eingesetzt werden.

Auf diese Weise lassen sich die Spritzenkörper 114 eindeutig identifizieren und die Information, welche zu diesem Spritzenkörper 114 gespeichert ist, auslesen. Dies kann beispielsweise wiederum über Datenleitungen 152 erfolgen, welche in Figur 1 symbolisch mit der Datenbank 142 verbunden sind, welche jedoch auch unter Zwischenschaltung eines oder mehrerer Computer eingerichtet sein können. Auf diese Weise kann - beispielsweise durch eine in Figur 1 nicht dargestellte Druckeinrichtung - sichergestellt werden, dass das Etikett 160, welches auf den Spritzenkörper 114 aufgebracht wird, eine korrekte Information über das pharmazeutische Material 118, welches in diesem Spritzenkörper 114 enthalten ist, enthält. Anstelle einer Aufbringung von Etiketten 160 kann auch der Spritzenkörper 114 unmittelbar beschriftet werden, beispielsweise mittels eines Laserbeschriftungsverfahrens und/oder eines Druckverfahrens.

Das Ergebnis des in Figur 1 dargestellten Verfahrens ist ein mit einem pharmazeutischen Material 118 befüllter Spritzenkörper 114, welcher durch einen Stopfen 120 verschlossen und mittels eines Etiketts 160 etikettiert ist. Selbst wenn mehrere pharmazeutische Materialien 118, beispielsweise mit unterschiedlichen Wirkstoffkonzentrationen in ein und derselben Vorrichtung 110 abgefüllt werden, stellt das beschriebene Verfahren einen Untermischungsschutz sicher, so dass letztendlich die Informationen auf dem Etikett 160 korrekt sind und/oder dass anhand des Abbildes 134 bzw. einer daraus gewonnen Datenstruktur der befüllte Spritzenkörper 114 und dessen Inhalt jederzeit wieder identifizierbar sind.

In Figur 3 ist ein Ausführungsbeispiel der Datenbank 142 symbolisch dargestellt. Die Datenbank 142 ist in diesem einfachen Ausführungsbeispiel als elektronische Tabelle ausgestaltet, welche beispielsweise in einen flüchtigen oder nicht flüchtigen Speicher eines Computers gespeichert sein kann. Die Datenbank 142 kann beispielsweise auch dupliziert werden, wobei diese ganz oder teilweise kopiert wird. Insofern ist, wenn von einem Zugriff auf "die" Datenbank die Rede ist, stets auch die Möglichkeit eines Zugriffs auf eine vollständige oder teilweise Kopie der ursprünglichen Datenbank 142 mit umfasst. Auch ein Zugriff über ein Computernetzwerk ist möglich.

Die Datenbank enthält zunächst in einer ersten Spalte das Abbild 134 der Zufallsstruktur 138. Dieses Abbild 134 ist in Figur 3 symbolisch mit "Code" bezeichnet und stellt einen eindeutigen Identifikator jedes Spritzenkörpers 114 dar. Wie oben beschrieben, bestehen mehrere, auch kumulativ einsetzbare Möglichkeiten zur Darstellung dieses Abbildes 134. Dieses Abbild 134 kann somit beispielsweise eine einfache Identifikationsnummer, welche eindeutig jedem Spritzenkörper 114 zugewiesen ist, darstellen. Alternativ oder zusätzlich ist jedoch auch eine reduzierte oder nicht reduzierte Abspeicherung von Rohdaten (beispielsweise Bilddaten) des Abbildes 134 und/oder ein Abspeichern der reduzierten Datenstruktur als Abbild 134 möglich, wobei - beispielsweise mittels eines der oben beschriebenen Algorithmen - eine Suche nach einem bestimmten Abbild 134 in der Datenbank 142 möglich sein sollte. Das Abbild 134 kann auch mehrere Spalten umfassen, beispielsweise eine erste "Spalte" mit Rohdaten zu jedem Spritzenkörper 114 und eine oder mehrere weitere Spalten für reduzierte Daten bzw. reduzierte Datenstrukturen.

Neben dem Abbild 134 umfasst die Datenbank 142 weitere Informationen 164 über das pharmazeutische Material 118. Diese Informationen 164 sind in Figur 3 symbolisch und beispielhaft dargestellt. Dabei beinhaltet eine erste Informationsspalte, welche in Figur 3 mit der Bezugsziffer 166 bezeichnet und mit "Line" betitelt ist, Informationen über die Abfüllvorrichtung 148. Eine zweite Spalte 168, welche mit "Product" betitelt ist, beinhaltet Produktinformationen über das pharmazeutische Material 118, beispielsweise eine Wirkstoffinformation. Im vorliegenden Beispiel ist dies beispielhaft das Medikament "Prod. X". Eine dritte Spalte 170, welche mit "Filling batch", beinhaltet Informationen über die Abfüllcharge, also beispielsweise über eine Gruppe von Spritzenkörpern 114, welche gemeinsam befüllt worden sind.

Die bislang genannten Informationen mit dem Abbild 134 und den zusätzlichen Informationen 166, 168 und 170 sind Informationen, welche während eines Abfüllvorgangs 172 (siehe Figur 1) in die Datenbank 142 eingetragen werden, also beispielsweise von der ersten Identifikationsvorrichtung 124.

Darüber hinaus kann die Datenbank 142 jedoch noch weitere Informationen enthalten, welche beispielsweise während eines Etikettiervorgangs 174 (siehe Figur 1) und/oder während eines nachfolgenden Verpackungsvorgangs (in Figur 1 nicht dargestellt, beispielsweise anschließend an den Etikettiervorgang 174) in die Datenbank 142 eingetragen werden. Diese zusätzlichen Informationen können beispielsweise eine Spalte für eine Etikettierlinie (Bezugsziffer 176, Titel "Line"), eine Information über eine Verpackungscharge (Bezugsziffer 178, Titel "Packaging batch") und eine Information über ein Verpackungs- und/oder Abfülldatum (Bezugsziffer 180, Titel "Date") enthalten.

Die Verantwortung bzw. Aufgabenverteilung für diese Datenbankeinträge der Datenbanken 142 kann unterschiedlich ausgestaltet sein. So können beispielsweise die Einträge des Abfüllvorgangs 172 unmittelbar von der ersten Identifikationsvorrichtung 142 vor und/oder beim und/oder nach dem Abfüllen vorgenommen werden und/oder mittels eines mit dieser ersten Identifikationsvorrichtung 142 verbundenen Computers. Dies ist in Figur 3 symbolisch dargestellt. Die Einträge des Etikettiervorgangs 174 können beispielsweise von der zweiten Identifikationsvorrichtung 162 vorgenommen werden und/oder von einer späteren, nachgeschalteten Identifikationsvorrichtung, beispielsweise einer Identifikationsvorrichtung einer Verpackungsmaschine, welche mehrere Spritzenkörper zusammen verpackt. Auch andere Ausgestaltungen der Datenbankeinträge sind denkbar.

Es sei noch darauf hingewiesen, dass bei der symbolischen Darstellung des Abfüllvorgangs 172 in Figur 3 ein Ausführungsbeispiel eines Spritzenkörpers 114 dargestellt ist, welcher zusätzlich Farbmarkierungen 181 in Form von aufgedruckten Farbringen umfassen kann. Anhand dieses Farbmarkierungen 181, welche bereits heute kommerziell verwendet werden, ist beispielsweise eine grobe Zuordnung der Spritzenkörper 114 (z.B. zu einem Medikament und/oder einer bestimmten Dosierung) möglich. Diese Farbmarkierungen sind jedoch unabhängig von dem beschriebenen Codierungsverfahren und ermöglichen in der Regel keine individuelle Identifizierung einzelner Spritzenkörper 114.

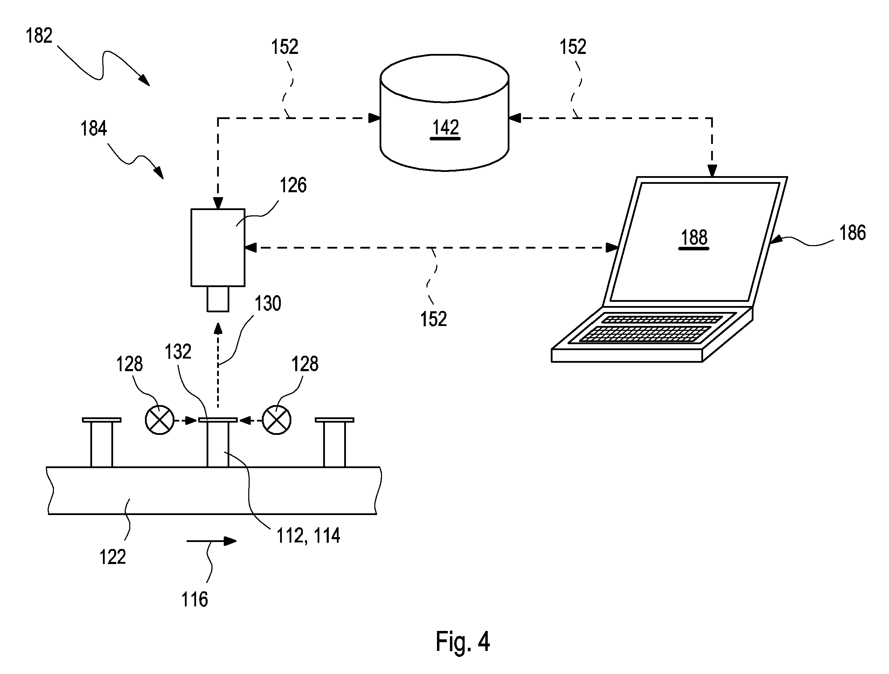

In Figur 4 ist schließlich eine Authentifizierungseinrichtung 182 symbolisch dargestellt, mittels derer beispielsweise ein erfindungsgemäßes Authentifizierungsverfahren durchgeführt werden kann. Diese Authentifizierungseinrichtung 182 kann beispielsweise in Krankenhäusern, Apotheken oder ähnlichen Einrichtungen, in welchen eine Vielzahl der pharmazeutischen Behältnisse 112 gehandhabt wird, eingesetzt werden, um zu erkennen, ob es sich bei den pharmazeutischen Behältnissen 112 um authentische Behältnisse oder um Fälschungen handelt.

Zu diesem Zweck umfasst die Authentifizierungseinrichtung 182 eine dritte Identifikationsvorrichtung 184, welche beispielsweise wiederum aufgebaut sein kann wie die oben beschriebenen ersten Identifikationsvorrichtungen 124 bzw. zweiten Identifikationsvorrichtungen 162. Insofern kann beispielsweise wiederum auf die Beschreibung der Figur 5 verwiesen werden. Optional kann die Authentifizierungseinrichtung 182 daneben wiederum einen in Figur 4 dargestellten Computer 186 umfassen sowie eine oder mehrere Datenleitungen 152.

Zur Authentifizierung der pharmazeutischen Behältnisse 112 bzw. Spritzenkörper 114 werden diese zunächst wiederum beispielsweise über eine Bereitstellvorrichtung 122 an die dritte Identifikationsvorrichtung 184 bereitgestellt und dort einem dritten Identifikationsschritt unterworfen, bei welchem wiederum ein Abbild der Zufallsstruktur der Fingerauflage 132 gewonnen wird. Durch direkten oder indirekten Zugriff auf die Datenbank 142 (wobei es sich beispielsweise wiederum um die Datenbank 142 direkt oder ein Abbild dieser Datenbank handeln kann) wird dann ermittelt, ob in der Datenbank 142 bereits ein passendes Abbild 134 abgespeichert ist. Dies kann beispielsweise wiederum in einem Vergleichsschritt erfolgen, in welchem das mittels der dritten Identifikationsvorrichtung 184 ermittelte Abbild mit den Abbildern 134 in der Datenbank 142 verglichen wird. Dies kann beispielsweise wiederum unter Zwischenschaltung des Computers 186 erfolgen. Die Datenbank 142 kann auch Bestandteil des Computers 186 sein und beispielsweise in einem flüchtigen oder nicht flüchtigen Datenspeicher dieses Computers gespeichert werden. Auf diese Weise kann erkannt werden, ob es sich bei dem pharmazeutischen Behältnis 112 um ein authentisches Behältnis handelt, also beispielsweise ein autorisiert hergestelltes Behältnis. Das Ergebnis dieses Authentifizierungsvorgangs kann beispielsweise auf eine Anzeigevorrichtung 188 des Computers 186 dargestellt werden, wobei beispielsweise im Falle einer Entdeckung eines nicht-authentifizierbaren bzw. autorisierten Produktes eine Warnung an einen Benutzer ausgegeben werden kann.

### Bezugszeichenliste

| | | | |
|---|---|---|---|
| 110 | Vorrichtung zur Befüllung von | 178 | Informationen über Verpackungs |
| | pharmazeutischen Behältnissen | | charge |
| 112 | pharmazeutische Behältnisse | 180 | Informationen über Verpackungs- |
| 114 | Spritzenkörper | | datum |
| 116 | Laufrichtung | 181 | Farbmarkierungen |
| 118 | pharmazeutisches Material | 182 | Authentifizierungseinrichtung |
| 120 | Stopfen | 184 | dritte Identifikationsvorrichtung |
| 122 | Bereitstellvorrichtung | 186 | Computer |
| 124 | erste Identifikationsvorrichtung | 188 | Anzeigevorrichtung |
| 126 | Kamera | 190 | Gehäuse |
| 128 | Beleuchtungseinrichtungen | 192 | Öffnung |
| 130 | Beobachtungsrichtung | 194 | schwarze Beschichtung |
| 132 | Fingerauflage | 196 | Hülse |
| 134 | Abbild | 198 | Abschrägungen |
| 136 | Glas | | |
| 138 | Zufallsstruktur | | |
| 140 | Gaseinschlüsse | | |
| 142 | Datenbank | | |
| 144 | Innenrand | | |
| 146 | Außenrand | | |
| 148 | Abfüllvorrichtung | | |
| 150 | Schlauchsystem | | |
| 152 | Datenleitung | | |
| 154 | Verschlussvorrichtung | | |
| 156 | Kolben | | |
| 158 | Etikettiervorrichtung | | |
| 160 | Etikett | | |
| 162 | zweite Identifikationsvorrichtung | | |
| 164 | Informationen über pharmazeutisches Material | | |
| 166 | Informationen über Abfüllvorrichtung | | |
| 168 | Produktinformation | | |
| 170 | Informationen über Abfüllcharge | | |
| 172 | Abfüllvorgang | | |
| 174 | Etikettiervorgang | | |
| 176 | Informationen über Etikettierlinie | | |

## Patentansprüche

1. Verfahren zur Befüllung von Behältnissen (112), insbesondere von pharmazeutischen Behältnissen, insbesondere von Spritzenkörpern (114), umfassend folgende Schritte:
- mindestens ein Behältnis (112) wird bereitgestellt, wobei das Behältnis (112) mindestens einen Werkstoff (136) mit einer Zufallsstruktur (138), insbesondere einer eindeutigen Zufallsstruktur (138), aufweist;
- in einem ersten Identifikationsschritt wird mindestens ein erstes Abbild (134) der Zufallsstruktur (138) gewonnen und in einer Datenbank (142) hinterlegt;
- mindestens ein Füllmedium (118), insbesondere mindestens ein pharmazeutisches Material, wird in das Behältnis (112) eingebracht;
- mindestens eine Information (164) über das Füllmedium (118) wird in der Datenbank (142) hinterlegt und dem ersten Abbild (134) der Zufallsstruktur (138) zugeordnet.

2. Verfahren nach dem vorhergehenden Anspruch, wobei die Zufallsstruktur (138) mindestens eine Struktur von Einschlüssen in dem Werkstoff (136), insbesondere von Gaseinschlüssen (140), insbesondere Luftbläschen, umfasst.

3. Verfahren nach einem der vorhergehenden Ansprüche, wobei das erste Abbild (134) in eine Datenstruktur umgewandelt wird, wobei die Datenstruktur in der Datenbank (142) hinterlegt wird und wobei die Datenstruktur das erste Abbild (134) der Zufallsstruktur (138) ersetzt und/oder zusätzlich zu dem ersten Abbild (134) der Zufallsstruktur (138) hinterlegt wird.

4. Verfahren nach dem vorhergehenden Anspruch, wobei die Datenstruktur mindestens eine Ortsinformation über die Zufallsstruktur (138), insbesondere mindestens eine Ortsinformation über Einschlüsse in dem Werkstoff (136), umfasst.

5. Verfahren nach einem der vorhergehenden Ansprüche, wobei der Werkstoff (136) zusätzlich mindestens eine Markierung, insbesondere eine Positionsmarkierung, umfasst.

6. Verfahren nach einem der vorhergehenden Ansprüche, wobei in dem ersten Identifikationsschritt mindestens ein Durchlichtverfahren verwendet wird, insbesondere ein Durchlichtverfahren mit einer Dunkelfeldbeleuchtung.

7. Verfahren nach einem der vorhergehenden Ansprüche, weiterhin umfassend mindestens einen zweiten Identifikationsschritt, wobei in dem zweiten Identifikationsschritt mindestens ein zweites Abbild (134) der Zufallsstruktur (138) gewonnen wird und das zweite Abbild (134) mit in der Datenbank (142) hinterlegten ersten Abbildern (134) verglichen wird.

8. Verfahren nach dem vorhergehenden Anspruch, wobei der Vergleich der Abbilder (134) mindestens eines der folgenden Vergleichsverfahren umfasst: ein Korrelationsverfahren; ein Mustererkennungsverfahren.

9. Verfahren nach einem der beiden vorhergehenden Ansprüche, wobei nach dem zweiten Identifikationsschritt mindestens ein Etikett (160) auf dem Behältnis (112) aufgebracht wird, wobei das Etikett (160) die Information (164) über das Füllmedium (118) ganz oder teilweise umfasst.

10. Verfahren nach einem der drei vorhergehenden Ansprüche, wobei nach dem zweiten Identifikationsschritt das Behältnis (112) mit einer Beschriftung versehen wird, wobei die Beschriftung die Information (164) über das Füllmedium (118) ganz oder teilweise umfasst.

11. Verfahren nach einem der vorhergehenden Ansprüche, wobei die Information (164) über das Füllmedium (118) mindestens eine der folgenden Informationen umfasst: eine Chargennummer des Füllmediums (118); eine Dosierung mindestens eines in dem Füllmedium (118) enthaltenen Wirkstoffs und/oder Nachweisstoffs; eine Menge des Füllmediums (118); eine Menge mindestens eines in dem Füllmedium (118) enthaltenen Wirkstoffs und/oder Nachweissstoffs; ein Abfülldatum; eine Information über eine Abfülllinie.

12. Verfahren nach einem der vorhergehenden Ansprüche, wobei das Behältnis (112) einen Spritzenkörper (114), insbesondere einen Spritzenkörper (114) aus Glas und/oder Kunststoff, umfasst.

13. Verfahren nach dem vorhergehenden Anspruch, wobei der die Zufallsstruktur (138) umfassende Werkstoff (136) einen Werkstoff einer Fingerauflage (132) des Spritzenkörpers (114) umfasst.

14. Verfahren nach einem der vorhergehenden Ansprüche, wobei für die Gewinnung des Abbildes (134) der Zufallsstruktur (138) ein optisches Verfahren, insbesondere ein optisches Streulichtverfahren, verwendet wird.

15. Vorrichtung (110) zur Befüllung von Behältnissen (112), insbesondere von pharmazeutischen Behältnissen, insbesondere von Spritzenkörpern (114), wobei die Vorrichtung (110) folgendes umfasst:
- mindestens eine Datenbank (142);
- mindestens eine Bereitstellvorrichtung (122) zum Bereitstellen eines Behältnisses (112), wobei das Behältnis (112) mindestens einen Werkstoff (136) mit einer Zufallsstruktur (138), insbesondere einer eindeutigen Zufallsstruktur (138), aufweist;
- mindestens eine erste Identifikationsvorrichtung (124) zur Durchführung mindestens eines ersten Identifikationsschritts, wobei in dem ersten Identifikationsschritt mindestens ein Abbild (134) der Zufallsstruktur (138) gewonnen wird und in der Datenbank (142) hinterlegt wird;
- mindestens eine Abfüllvorrichtung (148) zum Einbringen mindestens eines Füllmediums (118), insbesondere mindestens eines pharmazeutischen Materials, in das Behältnis (112),
wobei die Vorrichtung (110) eingerichtet ist, um mindestens eine Information (164) über das Füllmedium (118) in der Datenbank (142) zu hinterlegen und dem Abbild (134) der Zufallsstruktur (138) zuzuordnen.

16. Vorrichtung (110) nach dem vorhergehenden Anspruch, wobei die Vorrichtung (110) eingerichtet ist, um ein Verfahren nach einem der vorhergehenden, auf ein Verfahren gerichteten Ansprüche durchzuführen.

17. Vorrichtung (110) nach einem der beiden vorhergehenden Ansprüche, wobei die Vorrichtung (110) eingerichtet ist, um zu erkennen, ob alle bereitgestellten Behältnisse (112) die Vorrichtung (110) wieder verlassen haben.

18. Datenbank (142), umfassend mindestens ein Abbild (134) einer Zufallsstruktur (138) eines Werkstoffs (136) eines Behältnisses (112), insbesondere eines pharmazeutischen Behältnisses, und weiterhin umfassend mindestens eine Information (164) über mindestens ein in das Behältnis (112) eingebrachtes Füllmedium (118), insbesondere mindestens ein pharmazeutisches Material.

19. Datenbank (142) nach dem vorhergehenden Anspruch, wobei die Datenbank (142) eingerichtet ist, um in einem Verfahren nach einem der vorhergehenden, auf ein Verfahren gerichteten Ansprüche, verwendet zu werden.

20. Authentifizierungsverfahren zur Authentifizierung mindestens eines mit mindestens einem Füllmedium (118), insbesondere mindestens einem pharmazeutischen Material, befüllten Behältnisses (112), insbesondere mindestens eines pharmazeutischen Behältnisses, wobei das Behältnis (112) nach einem der vorhergehenden, auf ein Verfahren gerichteten Ansprüche befüllt ist, wobei das Authentifizierungsverfahren die folgenden Schritte umfasst:
- mindestens ein dritter Identifikationsschritt wird durchgeführt, wobei in dem dritten Identifikationsschritt mindestens ein drittes Abbild (134) der Zufallsstruktur (138) gewonnen wird; und
- in mindestens einem Vergleichsschritt wird das dritte Abbild (134) mit in der Datenbank (142) hinterlegten ersten Abbildern (134) verglichen.

21. Authentifizierungsverfahren nach dem vorhergehenden Anspruch, wobei, wenn in dem Vergleichsschritt kein zu dem dritten Abbild (134) passendes erstes Abbild (134) ermittelt wird, erkannt wird, dass das Behältnis (112) nicht authentisch ist.

22. Authentifizierungsverfahren nach dem vorhergehenden Anspruch, wobei, wenn erkannt wird, dass das Behältnis (112) nicht authentisch ist, eine Warnung an einen Benutzer ausgegeben wird.

23. Authentifizierungseinrichtung (182) zur Durchführung eines Authentifizierungsverfahrens nach einem der vorhergehenden, auf ein Authentifizierungsverfahren gerichteten Ansprüche, wobei die Authentifizierungseinrichtung (182) eingerichtet ist, um eine Vielzahl von Behältnissen (112), insbesondere von pharmazeutischen Behältnissen, zu prüfen und zu erkennen, ob diese authentisch sind.
